# FASCICULE DE BREVET EUROPEEN

(11) **EP 3 311 929 B1**
(45) Date de publication et mention de la délivrance du brevet: **06.11.2019**
(21) Numéro de dépôt: 17197300.1
(22) Date de dépôt: 19.10.2017
(51) Int. Cl.: B06B 1/16, F16H 55/17, B64C 27/00, F16F 15/32

(54) **GENERATEUR D'EFFORTS DYNAMIQUES A BALOURDS ET ACTIONNEUR COMPRENANT UN TEL GENERATEUR**
GENERATOR VON DYNAMISCHEN BEANSPRUCHUNGEN MIT UNWUCHT, UND STELLGLIED, DAS EINEN SOLCHEN GENERATOR UMFASST
DYNAMIC FORCE GENERATOR WITH IMBALANCE AND ACTUATOR COMPRISING SUCH A GENERATOR

(30) Priorité: 21.10.2016 FR 1660221
(43) Date de publication de la demande: 25.04.2018
(73) Titulaire: HUTCHINSON, 75008 Paris (FR)
(72) Inventeur: SIX, Marc François, 45120 Corquilleroy (FR); TAVIN, Gérard, 49100 Angers (FR)
(74) Mandataire: Gevers & Orès

(56) Documents cités:
- EP-A1- 0 409 462
- US-A- 4 561 319
- US-A- 5 903 077
- US-A1- 2004 003 671

## Description

L'invention concerne un générateur d'efforts dynamiques comprenant au moins une paire de balourds à masses excentrées et un actionneur comprenant un tel générateur.

Un générateur d'efforts dynamiques comprenant une paire de balourds à masses excentrées est connu du document FR 2 169 672 (D1).

On connaît également un générateur d'effort dynamique comprenant deux paires de balourds à masses excentrées, pour réduire voire supprimer une vibration engendrée par un corps en mouvement. Dans ce cas, le générateur d'efforts dynamiques permet de former un générateur d'efforts dynamiques variables, encore appelé actionneur. Dans chaque paire de balourds, les deux masses de la paire concernée tournent selon un mouvement contrarotatif. Le fait de mettre en œuvre deux paires de balourds permet alors de pouvoir contrôler l'amplitude de la force dynamique délivrée, en contrôlant le déphasage entre les deux paires. C'est le contrôle de cette amplitude, en soi alors variable, qui en fait un véritable actionneur.

Un actionneur (générateur d'efforts dynamiques variables) de ce type est décrit dans le document US 5 903 077 (D2) dans lequel les masses excentrées sont mécaniquement couplées par paires. Pour réaliser l'asservissement de fréquence et de phase de ces masses, on utilise des capteurs de position. La force générée par les masses excentrées est transmise par l'intermédiaire d'un carter supportant les balourds, ce qui nécessite que ce carter présente une masse suffisamment importante pour avoir une robustesse et raideur capables de transmettre l'effort dynamique et une aptitude à ne pas générer des modes vibratoires parasites. Par ailleurs, le couplage mécanique des balourds à masses excentrées contrarotatives est obtenu par engrènement extérieur des deux balourds placés à axes parallèles à l'aide de roues dentées de diamètre supérieur au diamètre extérieur des balourds. Le volume de l'actionneur est alors supérieur au volume des balourds proprement dits, et une masse importante ne participant pas à l'effet de balourd (la couronne dentée extérieure est nécessairement équilibrée et ne génère donc aucun effort dynamique). Enfin, les deux paires de balourds contrarotatifs sont de préférence placés i'un autour de l'autre sous peine d'introduire un moment dynamique parasite dans la structure, moment dont l'amplitude est inversement proportionnelle à celle de la force générée par l'actionneur. L'actionneur ainsi constitué présente un encombrement important et non polyvalent.

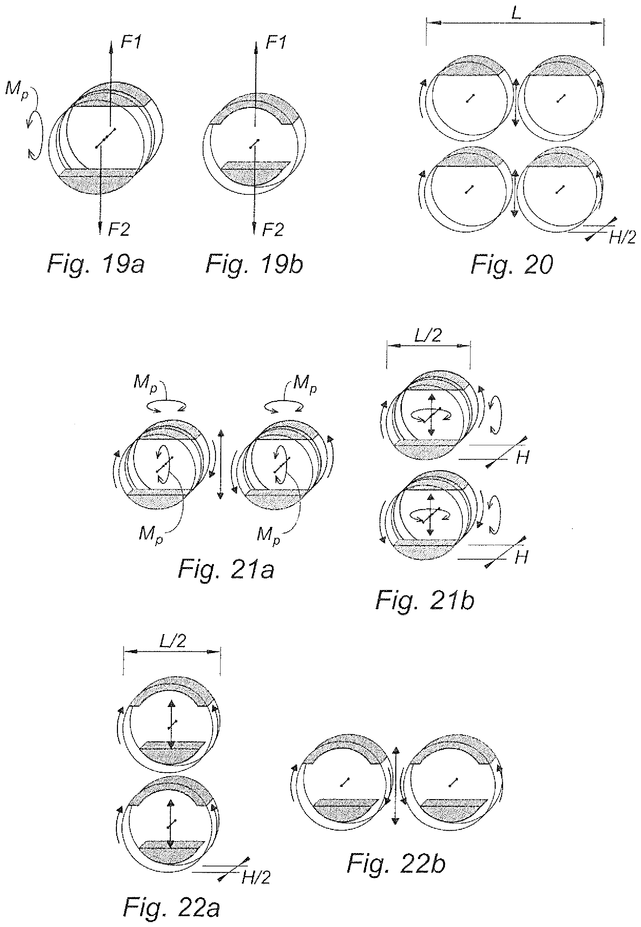

Un autre actionneur (générateur d'efforts dynamiques variables) de ce type est décrit dans le document EP 2 024 660 (D3). Dans ce document D3, les quatre balourds à masses excentrées sont mécaniquement indépendants. Cette indépendance mécanique donne de la liberté dans l'agencement des différents balourds. En particulier, pour réduire l'encombrement, on peut agencer les différentes masses excentrées coaxialement, et côte à côte. La commande des différents balourds peut alors être réalisée par un couplage électronique pour faire tourner les balourds de dans le sens souhaité. Toutefois, comme illustré à la figure 19a, cette position coaxiale côte à côte génère un moment parasite Mp, lié à l'existence d'une distance non nulle, le long de l'axe commun, entre les lieux d'application des forces F1 (premier balourd d'une paire lorsqu'il tourne) et F2 (deuxième balourd de cette même paire lorsqu'il tourne).

Encore un autre actionneur (générateur d'efforts dynamiques variables) de ce type est proposé dans le document EP 0 409 462 (D4). Ici, les quatre balourds sont également mécaniquement indépendants. Et pour éviter qu'un moment parasite ne soit engendré, les balourds sont imbriqués, c'est-à-dire que les différents centres de gravité de chaque balourd se situent dans un même plan, qui est en l'occurrence perpendiculaire à l'axe de rotation, coaxial, des différents balourds. En revanche, son encombrement est généralement plus important que celui qui est impliqué par l'agencement coaxial et côte à côte des différents balourds du document D3. En effet, l'encombrement global est affecté par l'encombrement radial lié à cette imbrication et également à l'intégration des moteurs dédiés à chaque balourd et situés entre deux balourds.

La présente invention vise à résoudre l'un au moins des inconvénients précités.

Plus particulièrement, la présente invention a pour objet un générateur d'efforts dynamiques à balourd du type comprenant au moins une paire de masses excentrées, qui présente un encombrement et un poids réduits à efficacité comparable par rapport aux solutions connues.

A cette fin, l'invention propose un générateur d'efforts dynamiques à balourds caractérisé en ce qu'il comprend un arbre bâti présentant un axe longitudinal et comportant, en outre,
- au moins une platine de support d'un moteur agencée radialement par rapport à l'axe longitudinal de l'arbre bâti ; et
- un système d'engrenage,
l'arbre bâti portant :
- un premier balourd constitué d'une masse excentrée par rapport à l'arbre bâti et reliée de manière rotative à l'arbre bâti par deux bras dont un est fixé au système d'engrenage ;
- un second balourd constitué d'une masse excentrée par rapport à l'arbre bâti et reliée de manière rotative à l'arbre bâti par un bras fixé au système d'engrenage, le second balourd étant agencé entre le premier balourd et l'arbre bâti, de manière coaxiale par rapport au premier balourd ;
- au moins un moteur supporté par ladite platine de support et en prise avec l'un au moins des premier et second balourds par l'intermédiaire du système d'engrenage, la platine de support et le moteur étant agencés entre les balourds et l'arbre bâti et entre un bras du premier balourd et le bras du deuxième balourd.

Ce générateur d'efforts dynamiques pourra comprendre l'une au moins des caractéristiques suivantes, prises seules ou en combinaison :
- l'arbre bâti comporte au moins deux platines de support d'un moteur agencées radialement par rapport à l'axe longitudinal de l'arbre bâti et autant de moteurs que de platines support, supportés chacun par une platine de support et en prise chacun avec un des premier et second balourds par l'intermédiaire du système d'engrenage, au moins un premier moteur étant en prise avec un des premier ou deuxième balourd, et au moins un deuxième moteur étant en prise avec l'autre des premier ou deuxième balourd ;
- l'arbre bâti comporte deux platines de support d'un moteur agencées radialement par rapport à l'axe longitudinal de l'arbre bâti, un premier et un deuxième moteurs supportés chacun par une platine de support et en prise chacun avec un seul des premier et second balourds par l'intermédiaire du système d'engrenage ; le générateur comprenant, en outre, une unité de contrôle apte à contrôler électroniquement une rotation contrarotative des premier et deuxième moteurs ;
- le système d'engrenage comprend deux réducteurs comprenant chacun deux roues dentées de diamètres différents, une de plus grand diamètre et une de plus petit diamètre, chaque roue dentée de plus grand diamètre étant fixée à un balourd différent et en prise avec une roue dentée de plus petit diamètre, et chaque roue dentée de plus petit diamètre étant fixée à une extrémité d'un arbre d'entraînement d'un moteur différent ;
- chaque roue dentée de plus petit diamètre est constituée par une roue à denture extérieure fixée à une extrémité d'un arbre d'entraînement d'un moteur différent, et les roues dentées de plus grand diamètre de deux réducteurs sont constitués de deux roues à denture extérieure, de deux couronnes à denture intérieure, ou d'une roue à denture extérieure et d'une couronne à denture intérieure ;
- l'un des bras de support du premier balourd est fixé à une première roue dentée de plus grand diamètre, l'autre bras de support du premier balourd étant fixé à un collier monté rotatif sur l'arbre bâti par l'intermédiaire d'un roulement, et le bras de support du second balourd est fixé à une deuxième roue dentée de plus grand diamètre ;
- le moteur comprend un arbre traversant dont chaque extrémité est en prise avec un des premier et second balourds par l'intermédiaire du système d'engrenage, ledit système d'engrenage comprenant deux réducteurs constitués chacun de deux roues dentées de diamètres différents, les deux roues dentées de plus petits diamètres étant chacune fixée à une extrémité de l'arbre traversant du moteur et chacune en prise avec une des deux roues dentées de plus grands diamètres, ces dernières étant également en prise chacune avec un balourd différent ;
- l'un des bras de support du premier balourd est fixé à une première roue dentée de plus grand diamètre, l'autre bras de support du premier balourd est fixé à un collier monté rotatif sur l'arbre bâti par l'intermédiaire d'un roulement, et le bras de support du second balourd est fixé à une deuxième roue dentée de plus grand diamètre ;
- les roues dentées de plus petits diamètres des réducteurs sont constituées par des roues à denture extérieure, et les roues dentées de plus grand diamètre sont constituées d'une roue à denture extérieure et d'une couronne à denture intérieure ;
- l'un des bras de support du premier balourd est fixé à la roue à denture extérieure, l'autre bras de support du premier balourd étant fixé à un collier monté rotatif sur l'arbre bâti par l'intermédiaire d'un roulement, et le bras de support du second balourd est fixé à la couronne à denture intérieure ;
- l'un des bras de support du premier balourd est fixé à la couronne à denture intérieure, l'autre bras de support du premier balourd est fixé à un collier monté rotatif sur l'arbre bâti par l'intermédiaire d'un roulement, et le bras de support du second balourd est fixé à la roue à denture extérieure ;
- l'arbre bâti comporte un premier bras de support d'un premier palier, dit premier bras palier, agencé radialement par rapport à l'axe longitudinal de l'arbre bâti, un axe de couplage mécanique étant supporté en rotation par le premier bras de palier, pour coupler le système d'engrenage de telle sorte que le premier et le second balourd soient contrarotatifs en utilisation ;
- le moteur présente une extrémité d'arbre en prise avec un des premier et second balourds par l'intermédiaire du système d'engrenage, ledit système d'engrenage comprenant :
   - un premier réducteur constitué de deux roues dentées de diamètres différents, la roue dentée de plus petit diamètre étant, d'une part, fixée à l'extrémité de l'arbre du moteur et, d'autre part, en prise avec la roue dentée de plus grand diamètre, cette dernière étant fixée sur le premier ou le deuxième balourd ;
   - un deuxième réducteur constitué de deux roues dentées de diamètres différents, la roue dentée de plus grand diamètre étant fixée sur l'autre balourd,
      une première extrémité de l'axe de couplage étant fixée à la roue dentée de plus petit diamètre du deuxième réducteur qui est engrené avec la roue dentée de plus grand diamètre du deuxième réducteur, une deuxième extrémité de l'axe de couplage étant fixée à une roue dentée engrenée avec la roue dentée de plus grand diamètre du premier réducteur, de tel sorte que les balourds soient couplés mécaniquement et montés contrarotatifs l'un par rapport à l'autre ;
- l'arbre bâti comporte au moins trois platines de support d'un moteur agencées radialement par rapport à l'axe longitudinal de l'arbre bâti et autant de moteurs que de platines support, supportés chacun par une platine de support et en prise chacun avec un des premier et second balourds par l'intermédiaire du système d'engrenage, au moins un premier et un deuxième moteurs étant en prise avec un des premier ou deuxième balourd, et au moins un troisième moteur étant en prise avec l'autre des premier ou deuxième balourd ;
- le système d'engrenage comprend :
   - un premier et un deuxième réducteurs constitués chacun de deux roues dentées de diamètres différents, les roues dentées de plus petit diamètre étant, d'une part, fixées à l'extrémité de l'arbre des premier et deuxième moteurs et, d'autre part, en prise avec les roues dentées de plus grand diamètre, ces dernières étant fixées sur le premier ou le deuxième balourd ;
   - un troisième réducteur constitué de deux roues dentées de diamètres différents, la roue dentée de plus petit diamètre étant, d'une part, fixée à l'extrémité de l'arbre du troisième moteur et, d'autre part, en prise avec la roue dentée de plus grand diamètre, cette dernière étant fixée sur l'autre balourd,
   - un quatrième et un cinquième réducteurs, chacun constitué de deux roues dentées de diamètres différents,
   une première extrémité de l'axe de couplage étant engrenée, par l'intermédiaire du quatrième réducteur, avec l'un des premier et second balourds,
   une deuxième extrémité de l'axe de couplage étant engrenée, par l'intermédiaire du cinquième réducteur, avec l'autre des premier et second balourds, de tel sorte que les balourds soient couplés mécaniquement et montés contrarotatifs l'un par rapport à l'autre ;
- l'arbre bâti comporte, en outre, un deuxième bras de support d'un deuxième palier, dit deuxième bras palier, agencé radialement par rapport à l'axe longitudinal de l'arbre bâti de telle sorte que le premier et le deuxième palier soient alignés de manière coaxiale, et que l'axe de couplage mécanique soit supporté de manière rotative par les deux paliers ;
- les roues dentées de plus petits diamètres des réducteurs sont constituées par des roues à denture extérieure, et les roues dentées de plus grand diamètre sont constituées d'une roue à denture extérieure et d'une couronne à denture intérieure ;
- l'un des bras de support du premier balourd est fixé à la roue à denture extérieure, l'autre bras de support du premier balourd étant fixé à un collier monté rotatif sur l'arbre bâti par l'intermédiaire d'un roulement, et le bras de support du second balourd est fixé à la couronne à denture intérieure ;
- l'un des bras de support du premier balourd est fixé à la couronne à denture intérieure, l'autre bras de support du premier balourd est fixé à un collier monté rotatif sur l'arbre bâti par l'intermédiaire d'un roulement, et le bras de support du second balourd est fixé à la roue à denture extérieure ;
- un circuit électrique d'alimentation dudit au moins un moteur s'étend en partie à l'intérieur de l'arbre bâti, l'autre partie sortant de l'arbre bâti par au moins une ouverture transversale et s'étendant jusqu'au(x) moteur(s).

De façon plus précise, la présente invention vise à proposer un générateur d'efforts dynamiques présentant, en outre, une rigidité accrue, et qui permet une utilisation polyvalente, c'est-à-dire qui peut être couplé verticalement ou horizontalement à un deuxième générateur d'efforts dynamiques à balourds selon l'invention, pour finalement former un générateur d'efforts dynamiques variables, à savoir un actionneur.

C'est pourquoi l'invention propose également un actionneur comprenant deux générateurs selon l'invention, dans lequel les générateurs sont, en position opérationnelle, agencés l'un à côté de l'autre, les deux arbres bâti étant parallèles et couplés électroniquement.

C'est pourquoi l'invention propose également un actionneur comprenant deux générateurs selon l'invention, dans lequel les générateurs sont, en position opérationnelle, agencés l'un au-dessus de l'autre, les deux arbres bâti étant parallèles et couplés mécaniquement.

L'invention pourra trouver une application pour contrer des vibrations dans différents domaines, parmi lesquels les aéronefs à voilure tournante (hélicoptère notamment) et les machines telles que des machines pour fabriquer le papier ou des blocs de béton, et plus généralement des machines-outils.

D'autres caractéristiques de l'invention ressortiront de la description détaillée ci-après faite en référence aux dessins annexés qui représentent, respectivement :
- la figure 1, une vue schématique en coupe d'un générateur d'efforts dynamiques selon l'invention comprenant une paire de balourds à masses excentrées et un seul moteur d'entraînement pour les deux balourds ;
- la figure 2, une vue schématique en coupe d'un générateur d'efforts dynamiques selon l'invention comprenant une paire de balourds et un seul moteur d'entrainement pour l'un des deux balourds, le deuxième balourd étant engrené de manière contrarotative sur le premier balourd par l'intermédiaire d'un axe de couplage mécanique ;
- la figure 3, une vue schématique en coupe d'un générateur d'efforts dynamiques selon l'invention comprenant une paire de balourds et un moteur d'entraînement dédié à chaque balourd ;
- la figure 4, une vue schématique en coupe d'un générateur d'efforts dynamiques selon l'invention comprenant une paire de balourds, deux moteurs d'entraînement pour un premier balourd, un moteur d'entraînement pour le deuxième balourd et un axe de couplage mécanique des deux balourds ;
- la figure 5, une vue schématique en coupe d'un générateur d'efforts dynamiques selon l'invention comprenant deux paires de balourds, correspondant plus précisément à l'association de deux générateurs d'efforts dynamiques tels que représentés sur la figure 1 ;
- les figures 6 à 15, des vues schématiques en perspective d'un exemple de réalisation d'un générateur d'efforts dynamiques selon l'invention comprenant une paire de balourds, un moteur pour chaque balourd et un axe de couplage mécanique des deux balourds;
- les figures 16 à 18, des vues schématiques en perspective d'un actionneur ou générateur d'efforts dynamiques variables selon l'invention associant deux paires de balourds, un moteur étant prévu pour chaque balourd ainsi qu'un axe de couplage mécanique des deux balourds d'une même paire, conformément aux schémas des figures 6 à 15 ;
- les figures 19a et 19b, des vues schématiques en perspective comparant un générateur d'efforts dynamiques selon l'état de la technique et un générateur d'efforts dynamiques selon l'invention ;
- la figure 20, une vue schématique en perspective d'un actionneur ou générateur d'efforts dynamiques variables selon l'état de la technique servant de référence ;
- les figures 21a et 21b, des vues schématiques en perspective de deux agencements possibles d'un actionneur ou générateur d'efforts dynamiques variables selon l'état de la technique ;
- les figures 22a et 22b, des vues schématiques en perspective d'un actionneur ou générateur d'efforts dynamiques variables conforme à l'invention et selon deux agencements possibles ; et
- la figure 23, un graphique représentant l'évolution de l'amplitude de la force dynamique (rapport de la valeur du ratio force/masse d'un actionneur selon l'invention sur la valeur du ratio force/masse d'un actionneur de référence) en fonction de la valeur de la masse des balourds des actionneurs selon l'invention (angle des masses), pour différentes géométries possibles.

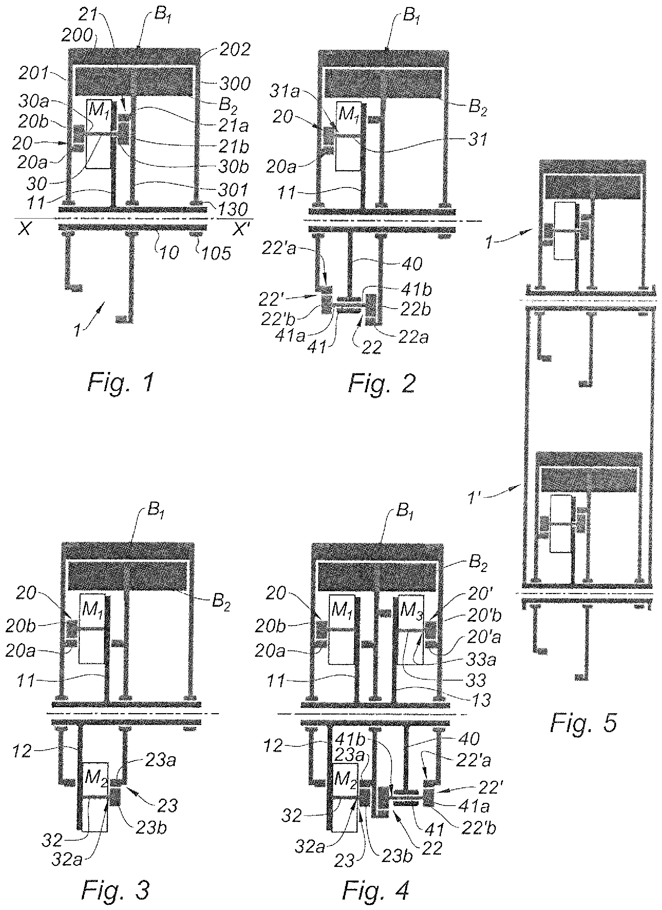

Selon l'invention, le générateur d'efforts dynamiques à balourds 1 illustré aux figures 1 à 5 comprend un arbre bâti 10 présentant un axe longitudinal X-X'. Il comporte, en outre,
- une ou plusieurs platines de support 11, 12, 13 d'un moteur M1, M2, M3 agencées transversalement par rapport à l'axe longitudinal de l'arbre bâti ; et
- un système d'engrenage 20, 21 décrit en détail par la suite.

L'arbre bâti 10 porte, en outre :
- un premier balourd B1, constitué d'une masse 200 excentrée par rapport à l'arbre bâti 10 et reliée de manière rotative à l'arbre bâti par deux bras 201, 202 dont un 201 est fixé au système d'engrenage 20, l'autre 202 étant fixé à une couronne 130 montée rotative sur un roulement 105 fixé à l'arbre bâti 10 par l'intermédiaire d'un roulement 130 ;
- un second balourd B2, constitué d'une masse 300 excentrée par rapport à l'arbre bâti 10 et reliée de manière rotative à l'arbre bâti par un bras 301, ce bras 301 étant par ailleurs fixé au système d'engrenage 21.

Le second balourd B2 est agencé entre le premier balourd B1 et l'arbre bâti 10, de manière coaxiale par rapport au premier balourd B1.

La ou les platines 11, 12, 13 supportent un (figures 1, 2 et 5) ou plusieurs (figures 3 et 4) moteurs en prise avec l'un au moins des premier et second balourds par l'intermédiaire du système d'engrenage 20, 21.

La ou les platines de support et le ou les moteurs sont agencés entre les balourds B1-B2 et l'arbre bâti 10, et entre le bras 201 du premier balourd B1 et un bras du deuxième balourd B2.

Cet agencement permet de limiter l'encombrement du générateur d'efforts dynamiques.

Le système d'engrenage 20, 21 permet de relier un moteur aux bras 201, 301. Le système d'engrenage comprend au moins deux réducteurs 2a et 21 (au moins un par balourd) comprenant chacun deux roues dentées de diamètres différents, une de plus grand diamètre que l'autre, chaque roue dentée de plus grand diamètre étant fixée à un balourd différent et en prise avec une roue dentée de plus petit diamètre.

Dans une première variante, chaque roue dentée de plus petit diamètre est fixée à une extrémité d'un arbre d'entraînement d'un moteur (figures 1, 3 et 4).

Dans une deuxième variante, une première roue dentée de plus petit diamètre est fixée à un arbre d'entraînement d'un moteur et une roue dentée de plus petit diamètre est fixée à une extrémité de l'axe rotatif de couplage (figure 2).

Le système d'engrenage peut comprendre, en outre, au moins un réducteur supplémentaire comprenant deux roues dentées de diamètres différents, une de plus grand diamètre et une de plus petit diamètre, la roue dentée de plus grand diamètre étant fixée à un des balourds. Cette roue dentée de plus grand diamètre peut être soit distincte de la roue dentée de plus grand diamètre de l'autre réducteur en prise avec ledit balourd, soit être confondue avec cette roue dentée. Dans ce dernier cas, les deux réducteurs ne présentent ensemble physiquement que trois roue dentées : une roue dentée commune de plus grand diamètre fixée au balourd concerné, et deux roues dentées de plus petit diamètre dont l'une au moins est fixée à un arbre d'entraînement d'un moteur, l'autre pouvant être fixée à une extrémité de l'axe rotatif de couplage (figure 4).

Dans un mode de réalisation particulier de l'invention, l'arbre bâti comporte, en outre, au moins un premier bras de support d'un premier palier, dit « bras palier » 40 agencé radialement (transversalement) par rapport à l'axe longitudinal X-X' de l'arbre bâti 10.

Contrairement au générateur du document EP 0 409 462, les couples de balourds imbriqués selon l'invention sont dissociés avantageusement positionnés l'un au-dessus de l'autre (Fig. 22a : la position autorisant le couplage mécanique et l'entraînement des deux balourds par un seul moteur), ou l'un à côté de l'autre.

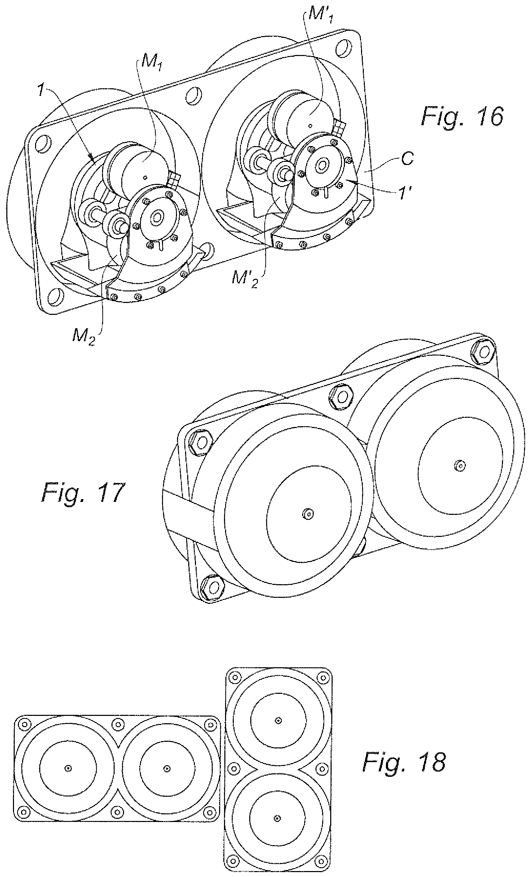

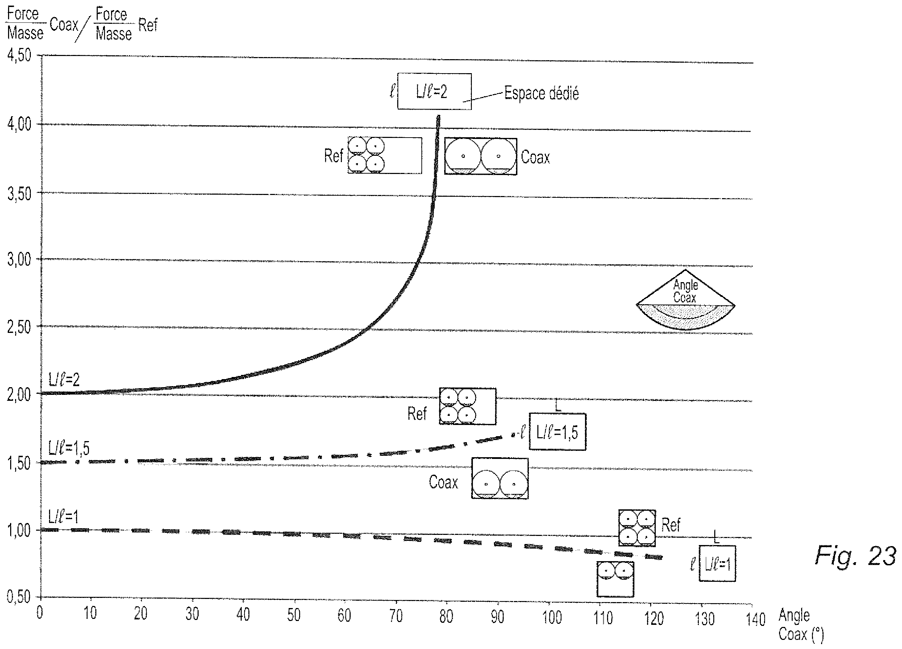

Ceci donne à l'invention une plus grande souplesse d'implantation permettant de répondre d'autant plus avantageusement à des volumes alloués proches d'une section L/I = 2 (voir figure 23), que cette section soit plus large horizontalement ou verticalement, et sans remise en cause de l'architecture mécanique du générateur d'efforts dynamiques (seul le pilotage est à adapter). L'architecture selon l'invention permet, en particulier, la réalisation d'un actionneur couplé mécaniquement à occupation au sol minimum grâce au positionnement superposé des deux couples imbriqués (voir figures 5 et 18).

L'avantage de l'invention réside dans la mise en œuvre d'une motorisation déportée dans le volume résiduel permettant en outre :
- De disposer d'un axe fixe central (l'arbre bâti 10) qui peut être dimensionné et employé pour supporter l'ensemble des contraintes mécaniques, le carter étant alors dans ce cas simplement une barrière physique contre l'intrusion de poussières ou autres produits, ou pour éviter qu'un objet puisse être inséré dans le générateur en cours de marche ou pour contenir le balourd en cas de défaillance avec désolidarisation mécanique de celui-ci ;
- Une implémentation simple d'un étage de réduction de type élémentaire (à engrènement intérieur ou extérieur et axes parallèles), permettant un couplage mécanique et une rotation contrarotative ;
- L'optimisation du rapport Force/masse pour des volumes alloués à section carrée ou non, idéalement de ratio L/I = 2.

Dans le mode de réalisation de la figure 1, le moteur M1 comprend un arbre traversant 30 dont chaque extrémité 30a-30b est en prise avec un des premier et second balourds B1, B2 par l'intermédiaire du système d'engrenage 20, 21 et des bras 201, 301.

Le système d'engrenage comprend deux réducteurs 20, 21 constitués chacun de deux roues dentées de diamètres différents, un de plus grand diamètre 20a-21a et un de plus petit diamètre 20b-21b. Les deux roues dentées de plus petits diamètres 20b-21b sont chacune fixée à une extrémité 30a-30b de l'arbre traversant 30 du moteur M1 et chacune est en prise avec l'une des deux roues dentées de plus grands diamètres 20a-21a. Ces dernières sont également fixées chacune à un balourd B1, B2 différent.

Autrement dit, l'une des roues dentées de plus grand diamètre étant en prise avec le premier balourd, l'autre des roues dentées de plus grand diamètre est en prise avec le deuxième balourd. Il convient de préciser que la roue dentée de plus grand diamètre 20a est à denture extérieure. La contra-rotativité des deux balourds est assurée par le choix du même rapport de réduction des réducteurs 20, 21.

Selon un autre mode de réalisation illustré en figure 2, l'arbre bâti 10 comporte un premier bras de support d'un premier palier, dit « premier bras palier » 40, agencé radialement par rapport à l'axe longitudinal X-X' de l'arbre bâti.

Le moteur M1 comprend un arbre non traversant 31, présentant une extrémité 31a en prise avec le premier balourd B1 et également en prise avec le second balourd B2, par l'intermédiaire du système d'engrenage 20.

Le système d'engrenage comprend :
- un axe de couplage mécanique 41 monté rotatif sur le premier bras palier 40, cet axe 41 étant agencé perpendiculairement au plan de rotation des balourds, c'est-à-dire parallèlement à l'axe longitudinal X-X' de l'arbre bâti, et couplant mécaniquement de manière contrarotative les premier et second balourds ; et
- trois réducteurs 20, 22, 22' constitués chacun de deux roues dentées de diamètres différents :
   ∘ un premier réducteur 20 couplant l'arbre 31 du moteur M1 avec un des premier ou second balourds (sur la figure 2, il s'agit du premier balourd B1) ;
   ∘ deux autres réducteurs 22, 22' couplant l'axe de couplage mécanique 41 avec l'autre des premier ou second balourds (sur la figure 2, il s'agit du second balourd B2) ; et

Plus particulièrement, le moteur M1 supporté par la platine de support 11 est en prise avec les premier et second balourds B1, B2 par l'intermédiaire du système d'engrenage. Dans ce mode de réalisation, le moteur est en prise avec le premier balourd, via le réducteur 20, et en prise avec le second balourd B2 via le premier balourd B1, c'est-à-dire que le second balourd B2 est entraîné en rotation par couplage mécanique avec le premier balourd, lui-même étant entraîné par le moteur (on peut qualifier la mise en prise du second balourd d'indirecte par rapport au moteur).

A cette fin, le système d'engrenage comporte non seulement trois réducteurs 20, 22, 22' mais également un axe rotatif 41 de couplage des deux balourds B1, B2 entre eux.

Plus précisément, le système d'engrenage comprend :
- un premier réducteur 20 constitué de deux roues dentées de diamètres différents, un de plus grand diamètre 20a et un de plus petit diamètre 20b, la roue dentée de plus petit diamètre 20b étant, d'une part, fixée à l'extrémité 31a de l'arbre 31 du moteur M1 et, d'autre part, en prise avec la roue dentée de plus grand diamètre 20a, cette dernière étant fixée sur le premier ou le deuxième balourd (sur la figure 2, il s'agit du premier balourd B1) ;
- un axe de couplage mécanique 41 monté rotatif sur le premier bras palier 40,
   ∘ une première extrémité 41a de l'axe de couplage 41 étant engrenée, par l'intermédiaire d'un deuxième réducteur 22', avec la roue dentée de plus grand diamètre 20a du premier réducteur 20 (fixé au premier balourd sur la figure 2),
   ∘ une deuxième extrémité 41b de l'axe de couplage 41 étant engrenée avec l'autre des premier et second balourds (sur la figure 2, il s'agit du deuxième balourd), par l'intermédiaire d'un troisième réducteur 22, de tel sorte que les balourds soient couplés mécaniquement et montés contrarotatifs l'un par rapport à l'autre.

Chaque réducteur 22, 22' est constitué de deux roues dentées de diamètres différents, un de plus grand diamètre 22a, 22'a et un de plus petit diamètre 22b, 22'b, la roue dentée de plus petit diamètre 22b, 22'b étant, d'une part, fixée à une extrémité 41b, 41a correspondante de l'axe de couplage 41 et, d'autre part, en prise avec la roue dentée de plus grand diamètre 22a, 22'a, la roue dentée 22a étant fixée sur l'autre des premier et second balourds (sur la figure 2, il s'agit du deuxième balourd) et la roue dentée 22'a étant fixée à la roue dentée de plus grand diamètre 20a du premier réducteur 20. La roue dentée 22a est à denture intérieure et la roue dentée 20a de plus grand diamètre est à denture extérieure.

La contra-rotativité des premier et second balourds est assurée, en outre, par le choix du même rapport de réduction des réducteurs 20, 22, 22'.

De manière facultative, l'arbre bâti 10 comporte, en outre, un deuxième bras de support d'un deuxième palier, dit « deuxième bras palier », agencé radialement par rapport à l'axe longitudinal de l'arbre bâti de telle sorte que le premier et le deuxième palier soient alignés de manière coaxiale, et que l'axe monté rotatif soit supporté par les deux paliers. Ceci permet d'assurer un maintien du parallélisme entre l'axe de couplage mécanique 41 et l'axe X-X' de l'arbre bâti 10.

Dans le mode de réalisation de la figure 3, l'arbre bâti comporte deux moteurs M1, M2, un pour chaque balourd B1, B2.

Plus précisément, outre les balourds identiques aux modes de réalisation précédents, l'arbre bâti comporte :
- deux platines 11, 12 de support d'un moteur agencées transversalement par rapport à l'axe longitudinal de l'arbre bâti,
- un premier M1 et un deuxième M2 moteurs supportés chacun par une platine de support 11, 12 et en prise chacun avec un seul des premier et second balourds par l'intermédiaire du système d'engrenage.

Le système d'engrenage comprend :
- un premier réducteur 20 constitué de deux roues dentées de diamètres différents, une de plus grand diamètre 20a et une de plus petit diamètre 20b, la roue dentée de plus petit diamètre étant, d'une part, fixée à l'extrémité 31a de l'arbre 31 du premier moteur M1 et, d'autre part, en prise avec la roue dentée de plus grand diamètre, cette dernière étant fixée sur le premier ou le deuxième balourd (sur la figure 3, il s'agit du premier balourd) ;
- un deuxième réducteur 23 constitué de deux roues dentées de diamètres différents, une de plus grand diamètre 23a et une de plus petit diamètre 23b, la roue dentée de plus petit diamètre étant, d'une part, fixée à l'extrémité 32a de l'arbre 32 du deuxième moteur M2 et, d'autre part, en prise avec la roue dentée de plus grand diamètre, cette dernière étant fixée sur l'autre balourd (sur la figure 3, il s'agit du deuxième balourd).

La rotation contrarotative des balourds est alors gérée électroniquement par des capteurs, de préférence au moins un capteur de la position angulaire d'un balourd et ce pour chaque balourd, et une unité de contrôle (non illustrés). Autrement dit, les balourds B1, B2 sont couplés électroniquement lorsque l'arbre bâti 10 ne comporte pas d'axe de couplage mécanique. Dans cette configuration, les balourds sont donc mécaniquement indépendants.

La figure 4 illustre la possibilité de prévoir plusieurs moteurs par balourd, le nombre de moteurs étant défini selon les performances globales visées pour le générateur, l'encombrement disponible, et les performances des moteurs considérés.

Sur la figure 4, outre les balourds identiques aux modes de réalisation précédents, l'arbre bâti comporte :
- trois platines 11, 12, 13 de support d'un moteur agencées transversalement (radialement) par rapport à l'axe longitudinal de l'arbre bâti ;
- un premier bras palier 40, agencé transversalement (i.e. radialement) par rapport à l'axe longitudinal de l'arbre bâti ;
- un premier M1, un deuxième M2 et un troisième M3 moteurs supportés chacun par une platine de support 11, 12, 13 et en prise chacun avec un des premier et second balourds par l'intermédiaire du système d'engrenage. Le premier M1 et le troisième M3 moteur sont en prise avec le premier balourd B1, alors que le deuxième moteur M2 est en prise avec le deuxième balourd B2.

Alternativement, c'est le deuxième balourd qui pourrait être en prise avec deux moteurs, et le premier avec un seul moteur. Également alternativement, chaque balourd pourrait être entraîné par deux moteurs ou plus, selon l'encombrement de chaque moteur et le surpoids engendré, les platines de support et les moteurs étant agencés entre les balourds et l'arbre bâti, et entre un bras du premier balourd et le bras du deuxième balourd.

Le système d'engrenage comprend :
- un premier réducteur 20 constitué de deux roues dentées de diamètres différents, une de plus grand diamètre 20a et une de plus petit diamètre 20b, la roue dentée de plus petit diamètre étant, d'une part, fixée à l'extrémité 31a de l'arbre 31 du premier moteur M1 et, d'autre part, en prise avec la roue dentée de plus grand diamètre, cette dernière étant fixée sur le premier ou le deuxième balourd (sur la figure 4, il s'agit du premier balourd B1) ;
- un deuxième réducteur 23 constitué de deux roues dentées de diamètres différents, une de plus grand diamètre 23a et une de plus petit diamètre 23b, la roue dentée de plus petit diamètre étant, d'une part, fixée à l'extrémité 32a de l'arbre 32 du deuxième moteur M2 et, d'autre part, en prise avec la roue dentée de plus grand diamètre, cette dernière étant fixée sur l'autre balourd (sur la figure 4, il s'agit du deuxième balourd B2).
- un troisième réducteur 20' constitué de deux roues dentées de diamètres différents, une de plus grand diamètre 20'a et une de plus petit diamètre 20'b, la roue dentée de plus petit diamètre étant, d'une part, fixée à l'extrémité 33a de l'arbre 33 du troisième moteur M3 et, d'autre part, en prise avec la roue dentée de plus grand diamètre, cette dernière étant fixée sur le premier ou le deuxième balourd (sur la figure 4, il s'agit du premier balourd B1).
- un axe de couplage 41 monté rotatif sur le premier bras palier 40, et couplant mécaniquement de manière contrarotative les premier et second balourds.

Sur la figure 4, on note les caractéristiques suivantes :
∘ une première extrémité 41a de l'axe de couplage 41 est engrenée avec l'un des premier et second balourds (sur la figure 4, il s'agit du premier balourd), par l'intermédiaire d'un quatrième réducteur 22', à la roue dentée de plus grand diamètre du troisième réducteur 20' (fixé au premier balourd sur la figure 4),
∘ une deuxième extrémité 41b de l'axe de couplage 41 est engrenée avec l'autre des premier et second balourds (sur la figure 4, il s'agit du deuxième balourd), par l'intermédiaire d'un cinquième réducteur 22, de telle sorte que les balourds soient couplés mécaniquement et montés contrarotatifs l'un par rapport à l'autre.

Le troisième réducteur 22' est constitué de deux roues dentées de diamètres différents, une de plus grand diamètre 22'a et une de plus petit diamètre 22'b, la roue dentée de plus petit diamètre 22'b étant, d'une part, fixée à la première extrémité 41a de l'axe de couplage 41 et, d'autre part, en prise avec la roue dentée de plus grand diamètre 22'a, cette dernière étant fixée sur le premier ou le deuxième balourd (sur la figure 4, il s'agit du premier balourd B1).

Le quatrième réducteur 22 est constitué de deux roues dentées de diamètres différents, une de plus grand diamètre 22a et une de plus petit diamètre 22b, la roue dentée de plus petit diamètre 22b étant, d'une part, fixée à la seconde extrémité 41b de l'axe de couplage 41 et, d'autre part, en prise avec la roue dentée de plus grand diamètre 22a, cette dernière étant fixée sur le premier ou le deuxième balourd (sur la figure 4, il s'agit du deuxième balourd B2).

De manière facultative, l'arbre bâti 10 comporte, en outre, un deuxième bras de support d'un deuxième palier, dit « deuxième bras palier », agencé transversalement (i.e. radialement) par rapport à l'axe longitudinal X-X' de l'arbre bâti 10 de telle sorte que le premier palier et le deuxième palier soient alignés de manière coaxiale, et que l'axe monté rotatif soit supporté par les deux paliers, assurant ainsi un meilleur maintien du parallélisme entre l'axe de couplage mécanique 41 et l'axe longitudinal X-X' de l'arbre bâti.

Grâce au couplage mécanique des deux balourds par l'axe de couplage mécanique, on peut prévoir plusieurs moteurs d'entraînement par balourd, puisque c'est l'axe de couplage qui détermine la synchronisation des balourds.

La structure particulière du générateur d'efforts dynamiques à balourds selon l'invention permet un couplage vertical (figures 5 et 18) ou horizontal (figures 16 à 18) avec deux sous parties identiques pour générateur former le générateur d'efforts dynamiques.

D'une manière générale, les roues dentées de plus petits diamètres des réducteurs sont constituées par des roues à denture externe.

Lorsque les deux balourds B1 et B2 sont couplés mécaniquement par un axe de couplage rotatif 41, les roues dentées de plus grand diamètre de deux réducteurs solidaires de balourds différents sont constituées d'une roue à denture extérieure et d'une couronne à denture intérieure. Ceci permet un entraînement contrarotatif des balourds par l'axe de couplage mécanique 41. Par ailleurs, des rapports de réduction identiques permettent d'obtenir la contrarotativité avec une même vitesse de rotation (absolue).

Par exemple, l'un des bras de support du premier balourd est fixé à la roue à denture extérieure, l'autre bras de support du premier balourd étant fixé à un collier monté rotatif sur l'arbre bâti par l'intermédiaire d'un roulement. Le bras de support du second balourd est fixé à la couronne à denture intérieure.

Alternativement, l'un des bras de support du premier balourd est fixé à la couronne à denture intérieure, l'autre bras de support du premier balourd étant fixé au collier. Le bras de support du second balourd est fixé à la roue à denture extérieure.

De cette manière, on s'assure qu'un couplage mécanique entre les deux balourds (par un moteur à axe traversant - figures 1-5- ou par un axe de couplage monté rotatif sur un ou deux bras palier(s) - figures 2-4) génère une rotation contrarotative des balourds.

Lorsque les balourds ne sont pas couplés mécaniquement mais électroniquement (figure 3), le type de roues dentées de plus grand diamètre de deux réducteurs solidaires de balourds différents sont indifférents : ils peuvent être constitués par deux roues à denture extérieure, par deux couronnes à denture intérieure, ou par une roue à denture extérieure et une couronne à denture intérieure. Ce qui importe c'est le sens de rotation imposé par l'unité de contrôle à chacun des moteurs, qui permet d'assurer finalement la contra-rotativité.

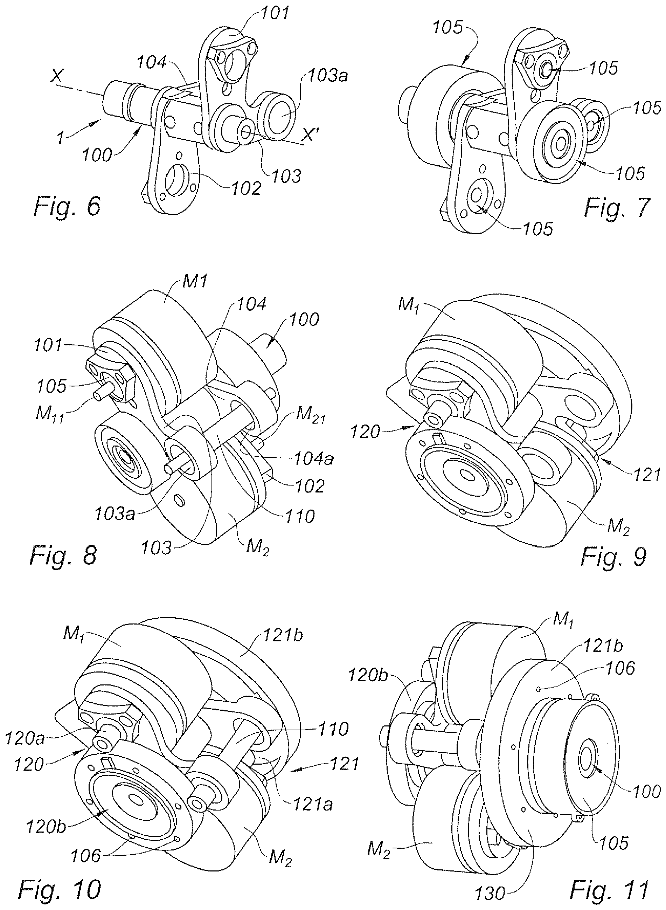

Les figures 6 à 15 illustrent un exemple de réalisation d'un générateur d'efforts dynamiques à balourds selon l'invention. Il s'agit d'un exemple de réalisation comportant un axe de couplage mécanique entre balourds, et ce conformément à la figure 4, mais un moteur par balourd, conformément à la figure 3.

Sur la figure 6, un arbre bâti 100 porte deux platines de support 101 et 102 destinées à supporter chacune un moteur (non illustré sur la figure 6). Les platines 101 et 102 sont agencées transversalement par rapport à l'axe longitudinal X-X' de l'arbre bâti 100. Ce dernier comporte également un premier bras de support 103 d'un premier palier 103a (voir figure 8), dit premier bras palier 103 et un deuxième bras de support 104 d'un deuxième palier 104a (voir figure 8), dit deuxième bras palier 104. Les deux bras paliers sont agencés transversalement par rapport à l'axe longitudinal X-X' de l'arbre bâti 100.

Sur la figure 7, sont illustrés différents roulements 105 fixés sur l'arbre bâti 100 et destinés à monter de manière rotative par rapport à cet arbre bâti 100, les pièces qui seront fixées sur ces roulements 105.

Comme illustré sur la figure 8, deux moteurs M1 et M2 sont fixés sur les platines 101 et 102. Chaque moteur M1 et M2 comprend un arbre M11 et M21 éventuellement supporté par un roulement 105 porté par un palier ménagé dans chaque platine de support 101 et 102. Il convient de noter qu'ici, la présence du roulement 105 n'est parfois pas obligatoire, notamment lorsque le guidage interne du moteur (qui prévoit une paire de roulements) s'avère suffisant pour absorber les contraintes radiales et parfois axiales transmises par la roue dentée liée à l'arbre moteur.

En outre, un axe de couplage mécanique 110 des balourds est supporté en rotation par le premier bras palier et le deuxième bras palier 103 et 104. Pour ce faire, l'axe de couplage mécanique 110 est fixé sur deux roulements 105 positionnés à l'intérieur des paliers 103a et 104a des premier et second bras paliers 103 et 104.

Sur la figure 9, l'axe de couplage mécanique 110 n'a pas été représenté par souci de clarté. Sur cette figure, l'arbre bâti comporte deux réducteurs 120 et 121 constitués chacun de deux roues dentées de diamètres différents, une roue dentée de plus petit diamètre 120a et 121a, et une roue dentée de plus grand diamètre 120b et 121b.

Les roues dentées de plus petit diamètre 120a et 121a sont fixés aux arbres M11 et M21 des moteurs M1 et M2. Ces roues dentées de plus petit diamètre 120a et 121a sont constituées par des roues à denture extérieure, et les roues dentées de plus grand diamètre 120b et 121b sont constituées, respectivement, par une roue à denture extérieure 120b et une couronne à denture intérieure 121b. Chaque roue dentée de plus petit diamètre 120a, 121a est engrenée avec une roue dentée de plus grand diamètre 120b et 121b.

L'axe de couplage mécanique 110 comprend, à chaque extrémité, une roue à denture extérieure engrenée d'une part avec la roue dentée de plus grand diamètre 120b du premier réducteur 120 et d'autre part avec la roue dentée de plus grand diamètre 121 b du deuxième réducteur 121. Ces deux roues dentées de plus grand diamètre 120b et 121b étant, respectivement, une roue à denture extérieure et une couronne à denture intérieure, l'axe de couplage mécanique 110 couple ces deux roues dentées de telle sorte qu'ils soient contrarotatifs en utilisation.

La figure 11 illustre une vue renversée par rapport à la figure 10 et illustrant, en outre, la présence d'un collier 130 monté rotatif sur i'arbre bâti 100 par l'intermédiaire d'un roulement 105.

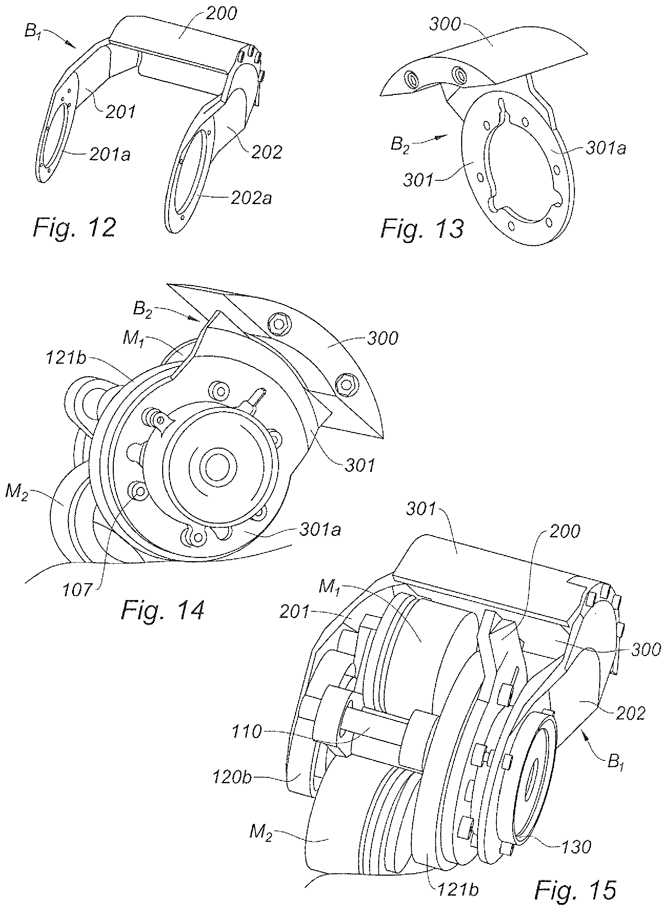

Les roues dentées de plus grand diamètre 120b et 121b, ainsi que le collier 130 présentent des moyens de fixation des balourds B1 et B2 illustrés aux figures 12 et 13. Ces moyens de fixation sont des trous 106 pour le passage de boulons.

Comme le montre les figures 12 et 13, chaque balourd est constitué d'une masse fixée à au moins un bras destiné à être porté sur l'arbre bâti de manière rotative.

Sur la figure 12, le balourd B1 comporte une masse 200 fixée à deux bras 201 et 202 comportant chacun une bride 201a et 202a de fixation au système d'engrenage. La masse 200 présente une face extérieure, en position d'utilisation, convexe. Elle présente également une face intérieure, en position d'utilisation, concave. Cette forme permet à la fois de minimiser l'encombrement de la masse 200 et de permettre de loger, sans frottements, la masse 300 du balourd B2. Ce dernier comporte, fixé à la masse 300, un bras 301 muni d'une bride 301a de fixation au système d'engrenage. La masse 300 présente une face extérieure, en position d'utilisation, convexe de telle sorte qu'elle puisse tourner sans frottements sous la masse 200 du balourd B1.

La figure 14 illustre le générateur d'efforts dynamiques illustré aux figures 6 à 11, et sur lequel est fixé le balourd B2. Plus précisément, la bride 301a du bras 301 est fixée sur la roue dentée de plus grand diamètre 121b du réducteur 121 par des boulons 107 vissés dans les trous filetés 106 portés par la roue dentée de plus grand diamètre 121b. De cette manière, le balourd B2 est relié de manière rotative à l'arbre bâti 100 par l'intermédiaire du réducteur 121, de telle sorte que la masse 300 soit excentrée par rapport à l'arbre bâti.

Sur la figure 15, le générateur d'efforts dynamiques de la figure 14 comprend, en outre, le balourd B1 fixé de manière rotative sur l'arbre bâti 100.

Plus précisément, le bras de support 201 est fixé sur la roue dentée de plus grand diamètre 120b du premier réducteur 120. L'autre bras 202 du balourd B1 est fixé au collier 130 monté rotatif sur l'arbre bâti 100 par l'intermédiaire du roulement 105.

Grâce à cet agencement, le balourd B1 se situe au-dessus du balourd B2 en position d'utilisation et présente une masse excentrée par rapport à l'arbre bâti. En outre, tout l'espace situé entre les masses 200 et 300 et l'arbre bâti 100 est utilisé pour loger les moteurs, le système d'engrenage et les roulements.

De plus, l'axe de couplage mécanique 110 lie mécaniquement les roues dentées de plus grand diamètre 120b et 121b de telle sorte que les balourds soient contrarotatifs en utilisation.

Les figures 16 et 17 illustrent un mode de réalisation d'un générateur d'efforts dynamiques variables (actionneur) comportant deux générateurs d'efforts dynamiques 1, 1' identiques et associés de telle sorte que leurs arbres bâtis soient parallèles. Chaque générateur d'efforts dynamiques 1, 1' est conforme à un générateur d'efforts dynamiques qui a été décrit à l'appui des figues 6 à 15. Chaque générateur d'efforts dynamiques 1, 1' est fixé par son arbre bâti respectif à un carter de protection C. Ce carter de protection présente une fonction de protection contre la poussière, les fluides ou tout élément extérieur pouvant gêner ou endommager les générateurs. Avantageusement, la fixation de l'actionneur sur sa structure d'accueil s'effectuera par l'intermédiaire de chaque arbre bâti 10, de sorte que les contraintes mécaniques ne passeront pas par le carter C. Néanmoins, sur les figures 16 et 17, on a représenté un cas où l'actionneur peut être fixé sur la structure d'accueil (présence de six trous sur le carter pour un moyen de fixation) et de ce fait subira les contraintes mécaniques : ceci est généralement pénalisant en termes de poids, car il faut dimensionner le carter en conséquence.

Comme le montre la figure 18, un actionneur ou générateur d'efforts dynamiques variables selon l'invention peut être agencé horizontalement (les générateurs d'efforts dynamiques 1, 1' sont alors agencés l'un à côté de l'autre, i.e. côte à côte), ou verticalement (les générateurs d'efforts dynamiques 1, 1' sont alors agencés l'un au-dessus de l'autre).

Dans le cas où, les balourds imbriqués d'un même générateur d'efforts dynamiques 1, 1' sont positionnés côte à côte (horizontalement), il est préférable que les balourds d'une même paire (à savoir au sein du module 1 ou du module 1') soient mis en rotation dans le même sens (co-rotation). Les balourds du générateur d'efforts dynamiques 1 sont toutefois entraînés dans un sens de rotation contrarotatif par rapport au sens de rotation des balourds du module 1'. Ce mode de fonctionnement permet d'éviter la génération d'un moment parasite entre les deux modules 1, 1'.

Avantageusement, les générateurs d'efforts dynamiques 1, 1' sont disposés l'un au-dessus de l'autre (verticalement). Dans ce cas, on peut entraîner les balourds d'une même paire (au sein du même module 1, 1') en contra-rotation, sans générer de moment parasite entre les deux modules 1, 1'. En conséquence, ceci autorise, au sein d'une même paire, le couplage mécanique et l'entraînement des deux balourds par un seul moteur.

Ceci donne à l'invention une plus grande souplesse d'implantation permettant de répondre d'autant plus avantageusement à des volumes alloués proches d'une section L/I = 2 (voir la figure 23, avec L la longueur et I, la largeur), que cette section soit plus large horizontalement ou verticalement, et sans remise en cause de l'architecture mécanique du générateur d'efforts dynamiques (seul le pilotage est à adapter: électronique ou non).

Grâce au positionnement des balourds dans un générateur d'efforts dynamiques 1, 1' donné selon l'invention, ce dernier ne génère pas de moment parasite M_{P} et ce contrairement au générateur d'efforts dynamiques selon l'état de la technique illustré à la figure 19a (document D3).

Les figures 20 à 22b comparent l'encombrement d'un générateur d'efforts dynamiques variables (actionneur) de l'état de la technique (fig. 20, fig. 21a et fig. 21b) par rapport au générateur d'efforts dynamiques variables (actionneur) selon l'invention (fig. 22a, fig. 22b).

Ainsi, la figure 20 illustre un générateur d'efforts dynamiques variables selon le document D2. Dans ce document, on obtient un encombrement carré dont chaque côté vaut deux fois le diamètre d'un seul des quatre balourds. La longueur de ce côté est noté « L » sur la figure 20.

La figure 21a illustre un générateur d'efforts dynamiques variables conforme au document D3. Ce générateur présente un encombrement rectangulaire de longueur L et largeur l = L/2. Par conséquent, l'encombrement en largeur est moindre que celui du générateur d'efforts dynamiques variables de la figure 20. Cependant, cet agencement présente une épaisseur H double par rapport au générateur d'efforts dynamiques variables de la figure 20 et génère, de surcroît, des moments parasites M_{P}.

La figure 21b illustre le même générateur d'efforts dynamiques variables de la figure 21a, mais dans une conformation verticale c'est-à-dire que les couples de balourds sont disposés l'un au-dessus de l'autre. En référence à la figure 2à, on peut faire les mêmes commentaires.

Les figures 22a et 22b montrent l'encombrement d'un générateur d'efforts dynamiques variables (actionneur) selon l'invention. Cet encombrement est rectangulaire et présente une longueur L et une largeur l = L/2. Sur ce plan, on rejoint donc la configuration des figures 21a ou 21b. Cependant, contrairement aux figures 21a et 21b, l'épaisseur est moitié moins importante que dans les générateurs des figures 21a et 21b et rejoint celle de la figure 20. En outre, contrairement aux conceptions des figures 21a et 21b, il n'y a aucun moment parasite M_{P}.

Le graphique de la figure 23 illustre la comparaison entre un générateur d'efforts dynamiques variables selon l'invention et une référence, à savoir un générateur d'efforts dynamiques variables selon la figure 20 (actionneur comprenant quatre balourds contrarotatifs deux à deux et non coaxiaux). Plus précisément, ce graphique représente l'évolution du rapport de la valeur du ratio force/masse d'un générateur d'efforts dynamiques variables selon l'invention sur la valeur du ratio force/masse de la référence, en fonction de la géométrie des balourds du générateur d'efforts dynamiques variables selon l'invention. La force prise en compte dans ce rapport est l'amplitude maximale de la force dynamique délivrée par le générateur d'effort dynamique variable.

La géométrie des balourds du générateur d'efforts dynamiques variables selon l'invention est représentée par la valeur de l'angle entre les deux extrémités de la masse d'un balourd et passant par l'axe de rotation de ce balourd. Autrement dit, plus cet angle est ouvert, plus la masse du balourd est importante, toutes choses égales par ailleurs (épaisseur de la masse, matière de la masse, etc.).

Le générateur d'efforts dynamiques variables selon l'invention et la référence ayant des géométries différentes, les calculs ont été réalisés de manière à optimiser les masses en fonction des géométries comparées.

Ainsi, on s'aperçoit que pour une architecture rectangulaire telle que L/l ± 2, un angle de masse des balourds coaxiaux selon l'invention de 75° permet d'obtenir une amplitude de la force dynamique quatre fois supérieure par rapport à l'architecture de référence, à masse de balourds identiques.

A contrario, pour obtenir une amplitude de la force dynamique égale à celle de la référence, l'architecture selon l'invention utilise une masse de balourds quatre fois inférieure. Ainsi, à amplitude égale, on diminue la masse du système antivibratoire, ce qui est un critère déterminant dans l'aéronautique.

La masse considérée dans ce graphique est celle des seuls balourds.

Dans ce cas, on note que l'architecture selon l'invention n'est intéressante que pour des valeurs de L/l supérieure à 1, voir 1,1. En effet, pour une valeur de rapport L/l égale à 1, l'architecture selon l'invention semble défavorable car si la masse des balourds augmente (c'est-à-dire si l'angle augmente), l'amplitude de la force dynamique est inférieure avec une architecture selon l'invention par rapport à une architecture de référence.

Cependant, en réalité, la masse du carter n'est pas négligeable dans le raisonnement. Sa contribution dans le cas L/l = 1 s'avère en outre particulièrement favorable à l'architecture selon l'invention puisqu'au final, le volume du carter sera réduit de moitié (sur le détail A, on s'aperçoit que les dimensions du carter peuvent être réduites puisque les balourds, imbriqués, ne prennent que la moitié de la place). L'avantage est d'autant plus marqué si, comme le permet cette architecture à axe central fixe selon l'invention, le carter est supprimé ou si sa masse est négligeable. Au final, le ratio force/masse sera donc systématiquement à l'avantage de l'architecture selon l'invention.

Avantageusement, l'arbre bâti sera tubulaire, c'est-à-dire qu'il présentera une lumière intérieure. C'est d'ailleurs un tel arbre bâti tubulaire qui est illustré sur les figures annexées. Grâce à cela, et grâce au fait que les structures de support (platines, roulements, bras paliers) sont portées par l'arbre bâti, un circuit électrique d'alimentation du ou des moteur(s) peut s'étendre en partie à l'intérieur de l'arbre bâti tubulaire, l'autre partie sortant de l'arbre bâti par au moins une ouverture transversale et s'étendant jusqu'au(x) moteur(s).

Selon d'autres caractéristiques de l'invention non illustrées :
- un générateur d'efforts dynamiques variables selon l'invention peut équiper un aéronef afin de compenser des vibrations de l'aéronef ;
- un générateur d'efforts dynamiques est avantageusement piloté par une unité de contrôle en réponse à un signal de vibration reçu à partir de capteurs placés dans l'aéronef de manière *ad hoc.*

Grâce au générateur d'efforts dynamiques selon l'invention, la transmission de la force n'est plus nécessairement réalisée par l'intermédiaire d'un carter capable de transmettre l'effort dynamique, ce qui allège l'ensemble.

La motorisation des balourds par l'intermédiaire de réducteurs à une seule paire de roues dentées (une de plus grand diamètre et une de plus petit diamètre), ainsi que la disposition excentrée du ou de chaque moteur, rendent le générateur beaucoup moins sensible aux perturbations dynamiques. En effet, le couple de perturbation crée sur le balourd, ramené à l'arbre moteur est réduit d'un facteur qui est inversement proportionnel au carré du rapport de réduction d'un réducteur.

Le couplage mécanique des balourds contrarotatifs est obtenu par un engrènement intérieur au volume des deux balourds, ce qui optimise le volume et la masse mis en œuvre. Dans l'invention, la motorisation est placée entre la paire de balourds coaxiaux et l'axe formé par l'arbre bâti, ce qui permet un couplage mécanique par une roue à denture extérieure et une couronne à denture intérieure soit directement par un moteur à axe traversant soit par un axe dédié. Les pignons et roues dentées associés sont de plus petit diamètre que l'enveloppe fonctionnelle des balourds, ce qui permet un gain de poids. De plus, l'entraînement conjugue couplage mécanique et réduction de vitesse tout en permettant de placer les balourds l'un dans l'autre suivant le même axe, ce qui divise pratiquement par deux le volume occupé et supprime tout effet de moment parasite.

La disposition excentrée de la motorisation intégrée entre deux balourds imbriqués permet une diminution importante du rapport « force » / « masse balourd » et une division par deux du rapport « force » / « volume » par rapport aux architectures à balourds à axes séparés ou coaxiaux non imbriqués. L'écart du rapport « force » / « masse balourd » peut aller de 1 à 4, au profit de l'invention, pour un même volume disponible, suivant la géométrie de l'espace dédié au système (voir la figure 23). Cet avantage provient du fait que la disposition coaxiale permet des diamètres de balourds plus grands et que l'imbrication des balourds permet une division du volume par deux.

Il convient par ailleurs de noter que, dans le cadre de l'invention, un générateur d'efforts dynamiques tel que représenté sur les figures 1 à 15 (deux balourds) offre la modularité de créer un générateur d'efforts dynamiques variables ou actionneur (2 fois 2 balourds, soit 4 balourds), tel que représenté sur les figures 16 à 18, en disposant chaque générateur d'efforts dynamiques de part et d'autre d'une paroi (ou d'une structure) horizontale ou verticale. Selon le cas, le couplage des balourds au sein des générateurs d'efforts dynamiques sera mécanique (cas vertical, fig. a) ou électronique (cas horizontal, fig. b) de façon à éviter tout moment dynamique parasite.

Enfin, en mode stabilisé (à la fréquence de rotation cible), peu d'énergie est nécessaire pour entretenir la rotation, à l'inverse du transitoire de démarrage (en particulier à basse température environnementale). Le générateur d'efforts dynamiques variables selon l'invention, lorsqu'il est équipé d'au moins deux moteurs et que la synchronisation est mécanique, permet de désactiver un moteur et d'assurer une redondance avec ce moteur secondaire pour palier à une défaillance du moteur principal.

## Revendications

1. Générateur (1) d'efforts dynamiques à balourds **caractérisé en ce qu'**il comprend un arbre bâti (10) présentant un axe longitudinal et comportant, en outre,
• au moins une platine de support (11, 12, 13) d'un moteur (M1, M2, M3) agencée radialement par rapport à l'axe longitudinal (X-X') de l'arbre bâti ; et
• un système d'engrenage (20, 21),
l'arbre bâti (10) portant :
• un premier balourd (B1) constitué d'une masse (200) excentrée par rapport à l'arbre bâti (10) et reliée de manière rotative à l'arbre bâti par deux bras (201, 202) dont un (201) est fixé au système d'engrenage (20, 21) ;
• un second balourd (B2) constitué d'une masse (300) excentrée par rapport à l'arbre bâti (10) et reliée de manière rotative à l'arbre bâti par un bras (301) fixé au système d'engrenage (20, 21), le second balourd (B2) étant agencé entre le premier balourd (B1) et l'arbre bâti (10), de manière coaxiale par rapport au premier balourd (B1);
• au moins un moteur (M1, M2, M3) supporté par ladite platine de support (11, 12, 13) et en prise avec l'un au moins des premier et second balourds (B1, B2) par l'intermédiaire du système d'engrenage (20, 21), la platine de support et le moteur étant agencés entre les balourds (B1, B2) et l'arbre bâti (10) et entre un bras du premier balourd et le bras du deuxième balourd.

2. Générateur (1) d'efforts dynamiques à balourds selon la revendication 1, dans lequel l'arbre bâti (10) comporte :
• au moins deux platines de support (11, 12, 13) d'un moteur agencées radialement par rapport à l'axe longitudinal (X-X') de l'arbre bâti (10);
• autant de moteurs (M1, M2, M3) que de platines support, supportés chacun par une platine de support et en prise chacun avec un des premier et second balourds (B1, B2) par l'intermédiaire du système d'engrenage (20, 21), au moins un premier moteur (M1) étant en prise avec un des premier ou deuxième balourd, et au moins un deuxième moteur (M2) étant en prise avec l'autre des premier ou deuxième balourd.

3. Générateur (1) d'efforts dynamiques à balourds selon la revendication 2, dans lequel l'arbre bâti (10) comporte :
• deux platines de support (11, 12, 13) d'un moteur agencées radialement par rapport à l'axe longitudinal (X-X') de l'arbre bâti (10),
• un premier et un deuxième moteurs (M1, M2, M3) supportés chacun par une platine de support et en prise chacun avec un seul des premier et second balourds (B1, B2) par l'intermédiaire du système d'engrenage (20, 21);
le générateur comprenant, en outre, une unité de contrôle apte à contrôler électroniquement une rotation contrarotative des premier et deuxième moteurs.

4. Générateur (1) d'efforts dynamiques à balourds selon la revendication 3, dans lequel le système d'engrenage (20, 21) comprend deux réducteurs (2a, 21) comprenant chacun deux roues dentées de diamètres différents, une (20a, 21a) de plus grand diamètre et une (20b, 21b) de plus petit diamètre, chaque roue dentée de plus grand diamètre étant fixée à un balourd différent et en prise avec une roue dentée de plus petit diamètre, et chaque roue dentée de plus petit diamètre étant fixée à une extrémité d'un arbre d'entraînement d'un moteur différent.

5. Générateur (1) d'efforts dynamiques à balourds selon la revendication 4, dans lequel chaque roue dentée (20b, 21 b) de plus petit diamètre est constituée par une roue à denture extérieure fixée à une extrémité d'un arbre d'entraînement d'un moteur différent, et les roues dentées de plus grand diamètre de deux réducteurs sont constitués de deux roues à denture extérieure, de deux couronnes à denture intérieure, ou d'une roue à denture extérieure et d'une couronne à denture intérieure.

6. Générateur (1) d'efforts dynamiques à balourds selon l'une quelconque des revendications 3 à 5, dans lequel l'un (201) des bras de support du premier balourd (B1) est fixé à une première roue dentée de plus grand diamètre, l'autre (202) bras de support du premier balourd (B1) étant fixé à un collier monté rotatif sur l'arbre bâti par l'intermédiaire d'un roulement, et le bras de support du second balourd est fixé à une deuxième roue dentée de plus grand diamètre.

7. Générateur (1) d'efforts dynamiques à balourds selon l'une quelconque des revendications 1 ou 2, dans lequel le moteur (M1) comprend un arbre traversant (30) dont chaque extrémité (30a, 30b) est en prise avec un des premier et second balourds (B1, B2) par l'intermédiaire du système d'engrenage (20, 21), ledit système d'engrenage comprenant deux réducteurs constitués chacun de deux roues dentées de diamètres différents, les deux roues dentées de plus petits diamètres (20b, 21b) étant chacune fixée à une extrémité de l'arbre traversant du moteur et chacune en prise avec une des deux roues dentées de plus grands diamètres (20a, 21a), ces dernières étant également en prise chacune avec un balourd différent.

8. Générateur (1) d'efforts dynamiques à balourds selon la revendication 7, dans lequel l'un des bras de support du premier balourd est fixé à une première roue dentée de plus grand diamètre, l'autre bras de support du premier balourd est fixé à un collier monté rotatif sur l'arbre bâti par l'intermédiaire d'un roulement, et le bras de support du second balourd est fixé à une deuxième roue dentée de plus grand diamètre.

9. Générateur (1) d'efforts dynamiques à balourds selon l'une quelconque des revendications 7 ou 8, dans lequel les roues dentées de plus petits diamètres des réducteurs sont constituées par des roues à denture extérieure, et les roues dentées de plus grand diamètre sont constituées d'une roue à denture extérieure et d'une couronne à denture intérieure.

10. Générateur (1) d'efforts dynamiques à balourds selon la revendication 9, dans lequel l'un des bras de support du premier balourd est fixé à la roue à denture extérieure, l'autre bras de support du premier balourd étant fixé à un collier monté rotatif sur l'arbre bâti par l'intermédiaire d'un roulement, et le bras de support du second balourd est fixé à la couronne à denture intérieure.

11. Générateur (1) d'efforts dynamiques à balourds selon la revendication 9, dans lequel l'un des bras de support du premier balourd est fixé à la couronne à denture intérieure, l'autre bras de support du premier balourd est fixé à un collier monté rotatif sur l'arbre bâti par l'intermédiaire d'un roulement, et le bras de support du second balourd est fixé à la roue à denture extérieure.

12. Générateur (1) d'efforts dynamiques à balourds selon l'une quelconque des revendications 1 ou 2, dans lequel l'arbre bâti (10) comporte un premier bras de support d'un premier palier, dit premier bras palier (40), agencé radialement par rapport à l'axe longitudinal de l'arbre bâti, un axe de couplage (41) mécanique étant supporté en rotation par le premier bras de palier, pour coupler le système d'engrenage de telle sorte que le premier et le second balourd soient contrarotatifs en utilisation.

13. Générateur (1) d'efforts dynamiques à balourds selon la revendication 12, dans lequel le moteur (M1) présente une extrémité d'arbre en prise avec un des premier et second balourds par l'intermédiaire du système d'engrenage (20, 21), ledit système d'engrenage comprenant :
• un premier réducteur (20) constitué de deux roues dentées de diamètres différents, la roue dentée (20b) de plus petit diamètre étant, d'une part, fixée à l'extrémité de l'arbre du moteur et, d'autre part, en prise avec la roue dentée (20a) de plus grand diamètre, cette dernière étant fixée sur le premier ou le deuxième balourd ;
• un deuxième réducteur (21) constitué de deux roues dentées de diamètres différents, la roue dentée de plus grand diamètre étant fixée sur l'autre balourd,
∘ une première extrémité de l'axe de couplage étant fixée à la roue dentée de plus petit diamètre du deuxième réducteur qui est engrené avec la roue dentée de plus grand diamètre du deuxième réducteur,
∘ une deuxième extrémité de l'axe de couplage étant fixée à une roue dentée engrenée avec la roue dentée de plus grand diamètre du premier réducteur, de tel sorte que les balourds soient couplés mécaniquement et montés contrarotatifs l'un par rapport à l'autre.

14. Générateur (1) d'efforts dynamiques à balourds selon la revendication 12, dans lequel l'arbre bâti comporte :
• au moins trois platines de support (11, 12, 13) d'un moteur agencées radialement par rapport à l'axe longitudinal de l'arbre bâti ;
• autant de moteurs (M1, M2, M3) que de platines support, supportés chacun par une platine de support et en prise chacun avec un des premier et second balourds par l'intermédiaire du système d'engrenage, au moins un premier et un deuxième moteurs étant en prise avec un des premier ou deuxième balourd, et au moins un troisième moteur étant en prise avec l'autre des premier ou deuxième balourd.

15. Générateur (1) d'efforts dynamiques à balourds selon la revendication 14, dans lequel ledit système d'engrenage comprend :
• un premier (20) et un deuxième réducteurs (22) constitués chacun de deux roues dentées de diamètres différents, les roues dentées de plus petit diamètre étant, d'une part, fixées à l'extrémité de l'arbre des premier et deuxième moteurs et, d'autre part, en prise avec les roues dentées de plus grand diamètre, ces dernières étant fixées sur le premier ou le deuxième balourd ;
• un troisième réducteur (22') constitué de deux roues dentées de diamètres différents, la roue dentée de plus petit diamètre étant, d'une part, fixée à l'extrémité de l'arbre du troisième moteur et, d'autre part, en prise avec la roue dentée de plus grand diamètre, cette dernière étant fixée sur l'autre balourd,
• un quatrième et un cinquième réducteurs, chacun constitué de deux roues dentées de diamètres différents,
∘ une première extrémité de l'axe de couplage étant engrenée, par l'intermédiaire du quatrième réducteur, avec l'un des premier et second balourds,
∘ une deuxième extrémité de l'axe de couplage étant engrenée, par l'intermédiaire du cinquième réducteur, avec l'autre des premier et second balourds, de tel sorte que les balourds soient couplés mécaniquement et montés contrarotatifs l'un par rapport à l'autre.

16. Générateur d'efforts dynamiques à balourds selon l'une quelconque des revendications 12 à 15, dans lequel l'arbre bâti comporte, en outre, un deuxième bras de support d'un deuxième palier, dit deuxième bras palier (104), agencé radialement par rapport à l'axe longitudinal de l'arbre bâti de telle sorte que le premier et le deuxième palier soient alignés de manière coaxiale, et que l'axe de couplage mécanique soit supporté de manière rotative par les deux paliers.

17. Générateur (1) d'efforts dynamiques à balourds selon l'une quelconque des revendications 12 à 16, dans lequel les roues dentées de plus petits diamètres des réducteurs sont constituées par des roues à denture extérieure, et les roues dentées de plus grand diamètre sont constituées d'une roue à denture extérieure et d'une couronne à denture intérieure.

18. Générateur (1) d'efforts dynamiques à balourds selon la revendication 17, dans lequel l'un des bras de support du premier balourd est fixé à la roue à denture extérieure, l'autre bras de support du premier balourd étant fixé à un collier monté rotatif sur l'arbre bâti par l'intermédiaire d'un roulement, et le bras de support du second balourd est fixé à la couronne à denture intérieure.

19. Générateur (1) d'efforts dynamiques à balourds selon la revendication 17, dans lequel l'un des bras de support du premier balourd est fixé à la couronne à denture intérieure, l'autre bras de support du premier balourd est fixé à un collier monté rotatif sur l'arbre bâti par l'intermédiaire d'un roulement, et le bras de support du second balourd est fixé à la roue à denture extérieure.

20. Générateur (1) d'efforts dynamiques à balourds selon l'une quelconque des revendications 1 à 19, dans lequel un circuit électrique d'alimentation dudit au moins un moteur s'étend en partie à l'intérieur de l'arbre bâti, l'autre partie sortant de l'arbre bâti par au moins une ouverture transversale et s'étendant jusqu'au(x) moteur(s).

21. Actionneur comprenant deux générateurs selon l'une quelconque des revendications 1 à 20, dans lequel les générateurs (1, 1') sont, en position opérationnelle, agencés l'un à côté de l'autre, les deux arbres bâti étant parallèles et couplés électroniquement.

22. Actionneur comprenant deux générateurs selon l'une quelconque des revendications 1 à 20, dans lequel les générateurs (1, 1') sont, en position opérationnelle, agencés l'un au-dessus de l'autre, les deux arbres bâti étant parallèles et couplés mécaniquement.

## Patentansprüche

1. Generator (1) von dynamischen Beanspruchungen mit Unwuchten, **dadurch gekennzeichnet, dass** er eine Rahmenwelle (10) umfasst, die eine Längsachse aufweist und weiter umfasst
• mindestens eine Stützplatte (11, 12, 13) eines Motors (M1, M2, M3), die radial in Bezug auf die Längsachse (X-X') der Rahmenwelle angeordnet ist; und
• ein Getriebesystem (20, 21),
wobei die Rahmenwelle (10) trägt:
• eine erste Unwucht (B1), die aus einer Masse (200) besteht, die in Bezug auf die Rahmenwelle (10) exzentrisch ist und durch zwei Arme (201, 202), von denen einer (201) am Getriebesystem (20, 21) befestigt ist, drehbar mit der Rahmenwelle verbunden ist;
• eine zweite Unwucht (B2), die aus einer Masse (300) besteht, die in Bezug auf die Rahmenwelle (10) exzentrisch ist und durch einen am Getriebesystem (20, 21) befestigten Arm (301) drehbar mit der Rahmenwelle verbunden ist, wobei die zweite Unwucht (B2) zwischen der ersten Unwucht (B1) und der Rahmenwelle (10) koaxial in Bezug auf die erste Unwucht (B1) angeordnet ist;
• mindestens einen Motor (M1, M2, M3), der durch die Stützplatte (11, 12, 13) gestützt wird und mit mindestens einer der ersten und zweiten Unwucht (B1, B2) über das Getriebesystem (20, 21) in Eingriff steht, wobei die Stützplatte und der Motor zwischen den Unwuchten (B1, B2) und der Rahmenwelle (10) und zwischen einem Arm der ersten Unwucht und dem Arm der zweiten Unwucht angeordnet sind.

2. Generator (1) von dynamischen Beanspruchungen mit Unwuchten nach Anspruch 1, wobei die Rahmenwelle (10) umfasst:
• mindestens zwei Stützplatten (11, 12, 13) eines Motors, die radial in Bezug auf die Längsachse (X-X') der Rahmenwelle (10) angeordnet sind;
• genauso viele Motoren (M1, M2, M3) wie Stützplatten, die jeweils durch eine Stützplatte gestützt werden und die jeweils über das Getriebesystem (20, 21) in Eingriff mit einer der ersten und zweiten Unwucht (B1, B2) stehen, wobei mindestens ein erster Motor (M1) mit einer der ersten oder zweiten Unwucht in Eingriff steht und wobei mindestens ein zweiter Motor (M2) mit der anderen der ersten oder zweiten Unwucht in Eingriff steht.

3. Generator (1) von dynamischen Beanspruchungen mit Unwuchten nach Anspruch 2, wobei die Rahmenwelle (10) umfasst:
• zwei Stützplatten (11, 12, 13) eines Motors, die radial in Bezug auf die Längsachse (X-X') der Rahmenwelle (10) angeordnet sind,
• einen ersten und einen zweiten Motor (M1, M2, M3), die jeweils durch eine Stützplatte gestützt werden und jeweils über das Getriebesystem (20, 21) mit einer einzigen der ersten und zweiten Unwucht (B1, B2) in Eingriff stehen;
wobei der Generator weiter eine Steuereinheit umfasst, die geeignet ist, eine gegenläufige Drehung des ersten und zweiten Motors elektronisch zu steuern.

4. Generator (1) von dynamischen Beanspruchungen mit Unwuchten nach Anspruch 3, wobei das Getriebesystem (20, 21) zwei Untersetzungsgetriebe (2a, 21) umfasst, die jeweils zwei Zahnräder unterschiedlicher Durchmesser umfassen, eines (20a, 21a) eines größeren Durchmessers und eines (20b, 21b) eines kleineren Durchmessers, wobei jedes Zahnrad eines größeren Durchmessers an einer unterschiedlichen Unwucht befestigt ist und mit einem Zahnrad eines kleineren Durchmessers in Eingriff steht und jedes Zahnrad eines kleineren Durchmessers an einem Ende einer Antriebswelle eines unterschiedlichen Motors befestigt ist.

5. Generator (1) von dynamischen Beanspruchungen mit Unwuchten nach Anspruch 4, wobei jedes Zahnrad (20b, 21b) eines kleineren Durchmessers durch ein Rad mit Außenverzahnung gebildet ist, das an einem Ende einer Antriebswelle eines unterschiedlichen Motors befestigt ist, und die Zahnräder eines größeren Durchmessers der zwei Untersetzungsgetriebe aus zwei Rädern mit Außenverzahnung, aus zwei Kränzen mit Innenverzahnung oder aus einem Rad mit Außenverzahnung und einem Kranz mit Innenverzahnung bestehen.

6. Generator (1) von dynamischen Beanspruchungen mit Unwuchten nach einem der Ansprüche 3 bis 5, wobei einer (201) der Stützarme der ersten Unwucht (B1) an einem ersten Zahnrad eines größeren Durchmessers befestigt ist, der andere (202) Stützarm der ersten Unwucht (B1) an einem über ein Lager drehbar auf der Rahmenwelle montierten Ring befestigt ist und der Stützarm der zweiten Unwucht an einem zweiten Zahnrad eines größeren Durchmessers befestigt ist.

7. Generator (1) von dynamischen Beanspruchungen mit Unwuchten nach einem der Ansprüche 1 oder 2, wobei der Motor (M1) eine durchgehende Welle (30) umfasst, von der jedes Ende (30a, 30b) mit einem der ersten und zweiten Unwucht (B1, B2) über das Getriebesystem (20, 21) in Eingriff steht, wobei das Getriebesystem zwei Untersetzungsgetriebe umfasst, die jeweils aus zwei Zahnrädern unterschiedlicher Durchmesser bestehen, wobei die zwei Zahnräder kleinerer Durchmesser (20b, 21b) jeweils an einem Ende der durchgehenden Welle des Motors befestigt sind und jeweils mit einem der zwei Zahnräder größerer Durchmesser (20a, 21a) in Eingriff stehen, wobei diese letzteren auch jeweils mit einer unterschiedlichen Unwucht in Eingriff stehen.

8. Generator (1) von dynamischen Beanspruchungen mit Unwuchten nach Anspruch 7, wobei einer der Stützarme der ersten Unwucht an einem ersten Zahnrad eines größeren Durchmessers befestigt ist, der andere Stützarm der ersten Unwucht an einem über ein Lager drehbar auf der Rahmenwelle montierten Ring befestigt ist und der Stützarm der zweiten Unwucht an einem zweiten Zahnrad eines größeren Durchmessers befestigt ist.

9. Generator (1) von dynamischen Beanspruchungen mit Unwuchten nach einem der Ansprüche 7 oder 8, wobei die Zahnräder kleinerer Durchmesser der Untersetzungsgetriebe durch Räder mit Außenverzahnung gebildet sind und die Zahnräder eines größeren Durchmessers aus einem Rad mit Außenverzahnung und aus einem Kranz mit Innenverzahnung bestehen.

10. Generator (1) von dynamischen Beanspruchungen mit Unwuchten nach Anspruch 9, wobei einer der Stützarme der ersten Unwucht am Rad mit Außenverzahnung befestigt ist, der andere Stützarm der ersten Unwucht an einem über ein Lager drehbar auf der Rahmenwelle montierten Ring befestigt ist und der Stützarm der zweiten Unwucht am Kranz mit Innenverzahnung befestigt ist.

11. Generator (1) von dynamischen Beanspruchungen mit Unwuchten nach Anspruch 9, wobei einer der Stützarme der ersten Unwucht am Kranz mit Innenverzahnung befestigt ist, der andere Stützarm der ersten Unwucht an einem über ein Lager drehbar auf der Rahmenwelle montierten Ring befestigt ist und der Stützarm der zweiten Unwucht am Rad mit Außenverzahnung befestigt ist.

12. Generator (1) von dynamischen Beanspruchungen mit Unwuchten nach einem der Ansprüche 1 oder 2, wobei die Rahmenwelle (10) einen ersten Stützarm eines ersten Achslagers, genannt erstes Armachslager (40), radial angeordnet in Bezug auf die Längsachse der Rahmenwelle, umfasst, wobei eine mechanische Kopplungsachse (41) in Drehung durch den ersten Achslagerarm gestützt wird, um das Getriebesystem so zu koppeln, dass die erste und die zweite Unwucht im Betrieb gegenläufig sind.

13. Generator (1) von dynamischen Beanspruchungen mit Unwuchten nach Anspruch 12, wobei der Motor (M1) ein Wellenende aufweist, das mit einer der ersten und zweiten Unwucht über das Getriebesystem (20, 21) in Eingriff steht, wobei das Getriebesystem umfasst:
• ein erstes Untersetzungsgetriebe (20), das aus zwei Zahnrädern unterschiedlicher Durchmesser besteht, wobei das Zahnrad (20b) eines kleineren Durchmessers einerseits am Ende der Welle des Motors befestigt ist und andererseits mit dem Zahnrad (20a) eines größeren Durchmessers in Eingriff steht, wobei dieses letztere auf der ersten oder der zweiten Unwucht befestigt ist;
• eine zweites Untersetzungsgetriebe (21), das aus zwei Zahnrädern unterschiedlicher Durchmesser besteht, wobei das Zahnrad eines größeren Durchmessers auf der anderen Unwucht befestigt ist,
∘ wobei ein erstes Ende der Kopplungsachse am Zahnrad eines kleineren Durchmessers des zweiten Untersetzungsgetriebes befestigt ist, das in das Zahnrad eines größeren Durchmessers des zweiten Untersetzungsgetriebes eingreift,
∘ wobei ein zweites Ende der Kopplungsachse so an einem Zahnrad befestigt ist, das in das Zahnrad eines größeren Durchmessers des ersten Untersetzungsgetriebes eingreift, dass die Unwuchten mechanisch gekoppelt sind und in Bezug zueinander gegenläufig montiert sind.

14. Generator (1) von dynamischen Beanspruchungen mit Unwuchten nach Anspruch 12, wobei die Rahmenwelle umfasst:
• mindestens drei Stützplatten (11, 12, 13) eines Motors, die radial in Bezug auf die Längsachse der Rahmenwelle angeordnet sind;
• genauso viele Motoren (M1, M2, M3) wie Stützplatten, die jeweils durch eine Stützplatte gestützt werden und die jeweils über das Getriebesystem in Eingriff mit einer der ersten und zweiten Unwucht stehen, wobei mindestens ein erster und ein zweiter Motor mit einer der ersten oder zweiten Unwucht in Eingriff stehen und wobei mindestens ein dritter Motor mit der anderen der ersten oder zweiten Unwucht in Eingriff steht.

15. Generator (1) von dynamischen Beanspruchungen mit Unwuchten nach Anspruch 14, wobei das Getriebesystem umfasst:
• ein erstes (20) und ein zweites Untersetzungsgetriebe (22), die jeweils aus zwei Zahnrädern unterschiedlicher Durchmesser bestehen, wobei die Zahnräder eines kleineren Durchmessers einerseits am Ende der Welle des ersten und zweiten Motors befestigt sind, und andererseits mit den Zahnrädern eines größeren Durchmessers in Eingriff stehen, wobei diese letzteren auf der ersten oder der zweiten Unwucht befestigt sind;
• ein drittes Untersetzungsgetriebe (22'), das aus zwei Zahnrädern unterschiedlicher Durchmesser besteht, wobei das Zahnrad eines kleineren Durchmessers einerseits am Ende der Welle des dritten Motors befestigt ist und andererseits mit dem Zahnrad eines größeren Durchmessers in Eingriff steht, wobei dieses letztere auf der anderen Unwucht befestigt ist,
• ein viertes und ein fünftes Untersetzungsgetriebe, die jeweils aus zwei Zahnrädern unterschiedlicher Durchmesser bestehen,
∘ wobei ein erstes Ende der Kopplungsachse über das vierte Untersetzungsgetriebe in eine der ersten und zweiten Unwucht eingreift,
∘ wobei ein zweites Ende der Kopplungsachse über das fünfte Untersetzungsgetriebe so in die andere der ersten und zweiten Unwucht eingreift, dass die Unwuchten mechanisch gekoppelt sind und in Bezug zueinander gegenläufig montiert sind.

16. Generator von dynamischen Beanspruchungen mit Unwuchten nach einem der Ansprüche 12 bis 15, wobei die Rahmenwelle weiter einen zweiten Stützarm eines zweiten Achslagers umfasst, genannt zweites Armachslager (104), so radial angeordnet in Bezug auf die Längsachse der Rahmenwelle, dass das erste und das zweite Achslager koaxial ausgerichtet sind und dass die mechanische Kopplungsachse drehbar durch die zwei Achslager gestützt wird.

17. Generator (1) von dynamischen Beanspruchungen mit Unwuchten nach einem der Ansprüche 12 bis 16, wobei die Zahnräder kleinerer Durchmesser der Untersetzungsgetriebe durch Räder mit Außenverzahnung gebildet sind und die Zahnräder eines größeren Durchmessers aus einem Rad mit Außenverzahnung und aus einem Kranz mit Innenverzahnung bestehen.

18. Generator (1) von dynamischen Beanspruchungen mit Unwuchten nach Anspruch 17, wobei einer der Stützarme der ersten Unwucht am Rad mit Außenverzahnung befestigt ist, der andere Stützarm der ersten Unwucht an einem über ein Lager drehbar auf der Rahmenwelle montierten Ring befestigt ist und der Stützarm der zweiten Unwucht am Kranz mit Innenverzahnung befestigt ist.

19. Generator (1) von dynamischen Beanspruchungen mit Unwuchten nach Anspruch 17, wobei einer der Stützarme der ersten Unwucht am Kranz mit Innenverzahnung befestigt ist, der andere Stützarm der ersten Unwucht an einem über ein Lager drehbar auf der Rahmenwelle montierten Ring befestigt ist und der Stützarm der zweiten Unwucht am Rad mit Außenverzahnung befestigt ist.

20. Generator (1) von dynamischen Beanspruchungen mit Unwuchten nach einem der Ansprüche 1 bis 19, wobei sich eine elektrische Schaltung zur Versorgung des mindestens einen Motors zum Teil im Inneren der Rahmenwelle erstreckt, wobei der andere Teil aus der Rahmenwelle durch mindestens eine Queröffnung heraustritt und sich bis zum/zu den Motor(en) erstreckt.

21. Stellglied, umfassend zwei Generatoren nach einem der Ansprüche 1 bis 20, wobei die Generatoren (1, 1'), in betriebsbereiter Position, einer neben dem anderen angeordnet sind, wobei die zwei Rahmenwellen parallel und elektronisch gekoppelt sind.

22. Stellglied, umfassend zwei Generatoren nach einem der Ansprüche 1 bis 20, wobei die Generatoren (1, 1'), in betriebsbereiter Position, einer über dem anderen angeordnet sind, wobei die zwei Rahmenwellen parallel und elektronisch gekoppelt sind.

## Claims

1. Dynamic imbalanced force generator (1)
**characterized in that**
it comprises a shaft frame (10) having a longitudinal axis and having, in addition,
• at least one support plate (11, 12, 13) of a motor (M1, M2, M3) arranged radially with respect to the longitudinal axis (X-X') of the shaft frame; and
• a gear system (20, 21),
wherein the shaft frame (10) carries:
• a first imbalance (B1) consisting of a mass (200) eccentric with respect to the shaft frame (10) and rotatably connected to the shaft frame formed by two arms (201, 202) of which one (201) is fixed to the gear system (20, 21);
• a second imbalance (B2) consisting of a mass (300) eccentric to the shaft frame (10) and rotatably connected to the shaft frame by an arm (301) attached to the gear system (20, 21), wherein the second imbalance (B2) is arranged coaxially with the first imbalance (B1) between the first imbalance (B1) and the shaft frame (10);
• at least one motor (M1, M2, M3) supported by the support plate (11, 12, 13) and engaged with at least one of the first and second imbalances (B1, B2) via the gear system (20, 21), wherein the support plate and the motor are arranged between the imbalances (B1, B2) and the shaft frame (10) and between an arm of the first imbalance and an arm of the second imbalance.

2. Dynamic imbalanced force generator (1) according to claim 1, wherein the shaft frame (10) comprises:
• at least two motor support plates (11, 12, 13) arranged radially with respect to the longitudinal axis (X-X') of the shaft frame (10);
• wherein each of the motors (M1, M2, M3) is supported by a support plate and each of the motors is engaged with one of the first and second imbalances (B1, B2) via the gear system (20, 21), wherein at least one first motor (M1) is engaged with one of the first or second imbalances, and wherein at least one second motor (M2) is engaged with the other of the first or second imbalances.

3. Dynamic imbalanced force generator (1) according to claim 2, wherein the shaft frame (10) comprises:
• two motor support plates (11, 12, 13) arranged radially with respect to the longitudinal axis (X-X') of the shaft frame (10),
• wherein a first and second motor (M1, M2, M3) is respectively supported by a support plate and is engaged with only one of the first and second imbalances (B1, B2) via the gear system (20, 21);
wherein the generator further comprises a control unit designed to control a counter-rotation of the first and second motors electronically.

4. Dynamic imbalanced force generator (1) according to claim 3, wherein the gear system (20, 21) comprises two reduction gears (2a, 21) each comprising two toothed wheels of different diameters, a toothed wheel (20a, 21a) of larger diameter and a toothed wheel (20b, 21b) of smaller diameter, wherein each larger diameter toothed wheel is fixed to a different imbalance and meshes with a smaller diameter toothed wheel, and wherein each smaller diameter toothed wheel is attached to one end of a drive shaft of a different motor.

5. Dynamic imbalance force generator (1) according to claim 4, wherein each smaller-diameter toothed wheel (20b, 21b) consists of an externally-toothed wheel fixed to one end of a drive shaft of a different motor, while the larger diameter toothed wheels of two reduction gears consist of two externally-toothed wheels, two inner-toothed rings, or an externally-toothed wheel and an internally-toothed ring.

6. Dynamic imbalanced force generator (1) according to claim 3 to 5, wherein one (201) of the support arms of the first imbalance (B1) is fastened to a larger first toothed wheel, while the other support arm (202) of the first imbalance (B1) is secured to a collar rotatably-mounted on the shaft frame by means of a bearing, and the support arm of the second imbalance is fixed to a second toothed wheel of larger diameter.

7. Dynamic imbalanced force generator (1) according to claim 1 or 2, wherein the motor (M1) comprises a traverse shaft (30), each end (30a, 30b) of which is engaged with one of the first and second imbalances (B1, B2) via the gear system (20, 21), wherein the gear system comprises two reduction gears each consisting of two toothed wheels of different diameters, wherein the two smaller diameter toothed wheels (20b, 21b) are respectively fixed to one end of the motor shaft and respectively mesh with one of the two toothed wheels of larger diameter (20a, 21a), wherein the latter are also respectively engaged with a different imbalance.

8. Dynamic imbalanced force generator (1) according to claim 7, wherein one of the support arms of the first imbalance is fixed to a first toothed wheel of larger diameter, while the other support arm of the first imbalance is fastened to a collar which is rotatably mounted on the shaft by means of a bearing, and wherein the support arm of the second imbalance is fixed to a second toothed of larger diameter.

9. Dynamic imbalanced force generator (1) according to one of the claims 7 or 8, wherein the toothed wheels of smaller diameter of the reduction gears consist of wheels with external toothing, while the toothed wheels of larger diameter consist of an externally toothed wheel and an internally toothed ring gear.

10. Dynamic imbalanced force generator (1) according to claim 9, wherein one of the support arms of the first imbalance is fixed to the externally toothed wheel, while the other support arm of the first imbalance is fixed to a collar mounted rotatably on the shaft formed by a bearing, while the support arm of the second imbalance is fixed to the internally toothed ring gear.

11. Dynamic imbalanced force generator (1) according to claim 9, wherein one of the support arms of the first imbalance is fixed to the internally toothed ring gear, while the other support arm of the first imbalance is fixed to a collar mounted rotatably on the shaft formed by a bearing, and wherein the support arm of the second imbalance is fixed to the externally toothed wheel.

12. Dynamic imbalanced force generator (1) according to one of the claims 1 or 2, wherein the shaft frame (10) comprises a first support arm of a first bearing, wherein the first bearing arm (40) is arranged radially with respect to the longitudinal axis of the shaft frame, and wherein a mechanical coupling axle (41) is rotatably supported by the first bearing arm for coupling the gear system so that the first and the second imbalance counter-rotate in use.

13. Dynamic imbalanced force generator (1) according to claim 12, wherein the motor (M1) has a shaft end engaged with one of the first and second imbalances by means of the gear system (20, 21), wherein the gear system comprises:
• a first reduction gear (20) consisting of two toothed wheels of different diameters, wherein the toothed wheel (20b) of smaller diameter is fixed, on the one hand, to the end of the motor shaft and, on the other hand, meshes with the larger-diameter toothed wheel (20a), wherein the latter is fixed to the first or the second imbalance;
• a second reduction gear (21) consisting of two toothed wheels of different diameters, wherein the toothed wheel of larger diameter is fixed to the other imbalance,
∘ wherein a first end of the coupling axle is fixed to the smaller diameter toothed wheel of the second reduction gear which meshes with the larger diameter toothed wheel of the second reduction gear,
∘ wherein a second end of the coupling axle is fastened to a toothed wheel meshed with the larger diameter toothed wheel of the first reduction gear, so that the imbalances are mechanically coupled and mounted counter-rotatably relative to one another.

14. Dynamic imbalanced force generator (1) according to claim 12, wherein the shaft frame comprises:
• at least three support plates (11, 12, 13) to support a motor arranged radially with respect to the longitudinal axis of the shaft frame;
• as many motors (M1, M2, M3) as there are support plates, wherein each is supported by a support plate and each engages with one of the first and second imbalances via the gear system, wherein at least one first and one second motor is in engagement with one of the first or second imbalances, and wherein at least one third motor is in engagement with the other of the first or second imbalance.

15. Dynamic imbalanced force generator (1) according to claim 14, wherein the gear system comprises:
• a first reduction gear (20) and a second reduction gear (22), respectively consisting of two toothed wheels of different diameters, wherein the smaller diameter toothed wheel is fixed, on the one hand, to the end of the first and second shafts of the motors, while, on the other hand, meshing with the larger diameter toothed wheels, wherein the latter are fixed to the first or the second imbalance;
• a third reduction gear (22') consisting of two toothed wheels of different diameters, wherein the toothed wheel of smaller diameter is fixed, on the one hand, to the end of the shaft of the third motor, while, on the other hand, meshing with the toothed wheel of larger diameter, wherein the latter is fixed to the other imbalance,
• a fourth and a fifth reduction gear, each consisting of two toothed wheels of different diameters,
∘ a first end of the coupling axle is meshed with one of the first and second imbalances via the fourth reduction gear,
∘ a second end of the coupling axle is engaged via the fifth reduction gear with the other end of the first and second imbalances, so that the imbalances are mechanically coupled and mounted counter-rotatably with respect to one another.

16. Dynamic imbalanced force generator (1) according to claim 12 to 15, wherein the shaft further consists of a second support arm of a second bearing, wherein the second bearing arm (104) is arranged radially with respect to the longitudinal axis of the shaft frame, so that the first and second bearings are coaxially aligned and the mechanical coupling axle is rotatably supported by the two bearings.

17. Dynamic imbalanced force generator (1) according to any one of claims 12 to 16, wherein the toothed wheels of smaller diameter of the reduction gears consist of externally toothed wheels and the toothed wheels of larger diameter consist of an externally toothed wheel and an internally toothed ring gear.

18. Dynamic imbalanced force generator (1) according to claim 17, wherein one of the support arms of the first imbalance is fixed to the externally toothed wheel, while the other support arm of the first imbalance is fixed to a collar mounted rotatably on the shaft frame by means of a bearing, and wherein the support arm of the second imbalance is fixed to the internally toothed ring gear.

19. Dynamic imbalanced force generator (1) according to claim 17, wherein one of the support arms of the first imbalance is fixed to the internally toothed ring gear, while the other support arm of the first imbalance is fixed to a collar mounted rotatably on the shaft frame by means of a bearing, and wherein the support arm of the second imbalance is fixed to the externally toothed wheel.

20. Dynamic imbalanced force generator (1) according to any one of claims 1 to 19, wherein an electrical circuit for supplying the at least one motor extends partly inside the shaft frame, while the other part exiting from the shaft frame extends through at least one transverse opening as far as the motor(s).

21. Actuator comprising two generators according to any one of the claims 1 to 20, in which the generators (1, 1') are arranged in a side-by-side arrangement, wherein the two shaft frames are parallel to one another and electronically coupled.

22. Actuator comprising two generators according to any one of claims 1 to 20, wherein the generators (1, 1') are arranged one above the other in the operational position, wherein the two shaft frames are parallel to one another and mechanically coupled.
